# EUROPEAN PATENT SPECIFICATION

(11) **EP 2 827 713 B1**
(45) Date of publication and mention of the grant of the patent: **05.09.2018**
(21) Application number: 13763907.6
(22) Date of filing: 14.03.2013
(51) Int. Cl.: A01N 25/04, A01N 57/20, A01N 39/04, A01P 13/00

(54) **AQUEOUS HERBICIDE CONCENTRATES CONTAINING FATTY ACID ALKYL ESTERS, FATTY ACID AMIDES, OR TRIGLYCERIDE FATTY ACID ESTERS AND METHODS OF USE**
HERBIZIDE WÄSSRIGE KONZENTRATE MIT FETTSÄUREALKYLESTERN, FETTSÄUREAMIDEN ODER TRIGLYCERIDFETTSÄUREESTERN UND VERWENDUNGSVERFAHREN
CONCENTRÉS HERBICIDES AQUEUX CONTENANT DES ESTERS ALKYLIQUES D'ACIDES GRAS, DES AMIDES D'ACIDES GRAS, OU DES ESTERS D'ACIDE GRAS DE TRIGLYCÉRIDE ET PROCÉDÉS D'UTILISATION

(30) Priority: 23.03.2012 US 201261614663 P
(43) Date of publication of application: 28.01.2015
(73) Proprietor: Dow AgroSciences LLC, Indianapolis, IN 46268 (US)
(72) Inventor: SHAO, Hui, Carmel, IN 46074 (US); ZHANG, Hong, Indainapolis, IN 46032 (US); TANK, Holger, Zionsville, IN 46077 (US); LI, Mei, Westfield, IN 46074 (US); QIN, Kuide, Westfield, IN 46074 (US); LIU, Lei, Carmel, IN 46032 (US); WILSON, Stephen L., Zionsville, IN 46077 (US)
(74) Representative: f & e patent
(86) International application number: PCT/US2013/031477
(87) International publication number: WO 2013/142263

(56) References cited:
- WO-A1-00/64257
- US-A- 3 619 168
- US-A1- 2007 270 612
- US-A1- 2011 301 033
- US-A1- 2011 301 033
- US-B1- 6 184 182
- US-B1- 6 500 782
- - - - - - - - - - - - - - - - - - -: "Adjuvants - Technical guide", , 1 January 2010 (2010-01-01), pages 1-48, XP55232486, Retrieved from the Internet: URL:http://www.unitedsuppliers.com/LinkCli ck.aspx?fileticket=GwJp8Sv3l3o=&tabid=80 [retrieved on 2015-12-01]
- "Adjuvants - Oils, surfactants and other additives for farm chemicals", , 1 December 2011 (2011-12-01), pages 1-52, XP55232046, Retrieved from the Internet: URL:https://www.grdc.com.au/~/media/7B1FA5 27DC2D45DE96C89FD0B61C941C.pdf [retrieved on 2015-11-27]

## Description

### BACKGROUND

Agricultural spraying by economical and available technologies uses hydraulic spray nozzles that inherently produce a wide spectrum of spray droplet sizes. The potential for these spray droplets to drift from the initial, desired site of application is found to be a function of droplet size, with smaller droplets having a higher propensity for off-target movement. Significant research efforts, involving numerous field trials, wind tunnel tests and subsequent generation of predictive math models have led to a greatly enhanced understanding of the relationship between spray droplet size and potential for off-target drift. Although other factors such as meteorological conditions and spray boom height contribute to the potential for drift, spray droplet size distribution has been found to be a predominant factor. Teske et. al. (Teske M. E., Hewitt A. J., Valcore, D. L. 2004. The Role of Small Droplets in Classifying Drop Size Distributions ILASS Americas 17th Annual Conference: Arlington VA) have reported a value of <156 microns (µm) as the fraction of the spray droplet distribution that contributes to drift. Robert Wolf (Wolf, R. E., Minimizing Spray Drift, December 15, 1997, Microsoft® PowerPoint Presentation, available at www.bae.ksu.edu/faculty/wolf/drift.htm, *last viewed* January 26, 2012) cites a value of <200 µm as the driftable fraction. A good estimation of droplet size likely to contribute to drift, therefore, is the fraction below about 150 µm.

The negative consequences of off-target movement can be quite pronounced. Some herbicides have demonstrated very sensitive phytotoxicity to particular plant species at extremely low parts per million (ppm) or even parts per billion (ppb) levels, resulting in restricted applications around sensitive crops, orchards, and residential plantings. For example, the California Dept of Pesticide Regulation imposes buffers of ½ - 2 miles for propanil containing herbicides applied aerially in the San Joaquin valley.

### SUMMARY

The methods and compositions described herein include aqueous concentrates containing a water soluble salt of an auxinic herbicide, a surfactant as defined in claim 1, and a fatty acid alkyl ester, a fatty acid amide, and/or a triglyceride fatty acid ester as defined in claim 1 and the use of aqueous herbicide spray mixtures incorporating such concentrates. The aqueous herbicide concentrates described herein include from 5 to 90 weight percent of a water soluble salt of an auxinic herbicide, from 0.1 to 20 weight percent of the surfactant, and from 0.1 to 20 weight percent of the fatty acid alkyl ester, the fatty acid amide and/or the triglyceride fatty acid ester.
These aqueous herbicide concentrates are transparent, homogeneous liquids that form a stable emulsion upon dilution into a spray solution. The methods for reducing spray drift during herbicide spray application to control plant growth include providing an aqueous herbicide concentrate as described, adding the aqueous herbicide concentrate to a spray tank containing water to form a stable emulsion, and spraying the stable emulsion to control plant growth.

### DETAILED DESCRIPTION

Methods and compositions to reduce spray drift are described herein. The methods and compositions reduce the amount of driftable fines of a herbicide spray in both aerial and ground spray applications. The methods include the use of aqueous herbicide spray mixtures incorporating a fatty acid alkyl ester, fatty acid amide, and/or a triglyceride fatty acid ester as defined in claim 1 and one or more auxinic herbicides.
The aqueous herbicide concentrates as described herein include from 5 to 90 weight percent of a water soluble salt of the herbicide, from 0.1 to 20 weight percent of the surfactant; and from 0.1 to 20 weight percent of the fatty acid alkyl esters, fatty acid amides, and/or the triglyceride fatty acid esters described herein. The aqueous herbicide concentrates as described herein are transparent, homogeneous liquids that form a stable emulsion upon addition to water.

Herbicides useful with the methods and compositions described herein are auxinic herbicides. Auxinic herbicides useful with the methods and compositions described herein include, for example, clopyralid, triclopyr, 2,4-D, 2,4-DB, MCPA, MCPB, aminocyclopyrachlor, aminopyralid, dicamba, halauxifen, picloram, or mixtures thereof. The methods described herein are most particularly useful for the application of herbicides that are subject to restricted applications around sensitive crops such as spray mixtures containing glyphosate, 2,4-D, triclopyr, dicamba, or mixtures thereof.

Fatty acid alkyl esters, fatty acid amides, and/or triglyceride fatty acid esters useful with the methods and compositions described herein may be derived from or made from plant or animal sources and include, for example, vegetable oil, seed oil, or animal oil, or monoesters derived from vegetable, seed, or animal oils, or mixtures thereof. The fatty acid alkyl esters useful with the methods and composition described herein are methyl caproate, methyl caprylate, methyl caprate, methyl laurate, methyl myristate, methyl palmitate, methyl stearate, methyl oleate, methyl linoleate, methyl linolenate, and mixtures thereof. The fatty acid amides useful with the methods and composition described herein are N,N-dimethylcaprylamide (N,N-dimethyloctanamide), N,N-dimethylcapramide (N,N-dimethyldecanamide), and mixtures thereof, which are available commercially as Agnique® AMD 810 and Agnique® AMD 10 (BASF-Cognis; Cincinnati, OH). The triglyceride fatty acid esters useful with the methods and composition described herein are vegetable or seed oils selected from soybean oil, rape seed oil, olive oil, almond oil, canola oil, omega-9 canola oil, castor oil, sunflower seed oil, coconut oil, corn oil, cotton seed oil, linseed oil, palm oil, peanut oil, safflower oil, sesame oil, tung oil, and mixtures thereof.

The surfactants useful with the methods and compositions described herein may be phosphate ester surfactants, polymeric surfactants, or mixtures thereof as defined in claim 1 and further described below and may be anionic or nonionic in character. Examples of useful surfactants include ABA block copolymers; polyvinyl alcohol resins; block or graft acrylate or methacrylate copolymers; alkyd polyethylene oxide resins; AB block copolymers containing EO and PO blocks such as ethylene oxide-propylene oxide (EO-PO) block copolymers; acids or salts of mono and dialkyl phosphate esters; acids or salts of ethoxylated mono and dialkyl phosphate esters; acids or salts of mono and dialkyl phosphate esters of ethoxylated tristyrylphenol; acids or salts of mono and dialkyl phosphate esters of ethoxylated phenol and ethoxylated alkylphenols; and mixtures thereof.

Examples of useful phosphate ester surfactants include: Atlox™ DP13/6, Cresplus™ 1209, Crodafos™ 810A, Crodafos™ 810D, Crodafos™ CO5A, Crodafos™ CS2A, Crodafos™ D4A, Crodafos™ G26A, Crodafos™ O10A, Crodafos™ O3A, Multitrope 1214, Crodafos™ T5A, and Crodafos™ T6A (all from Croda; Edison, NJ), Cedephos FA-600, Petrostep® PE-70T, Polystep® P-12A, Polystep® P-33, Polystep® TSP-16PE, Stepan® MWA-311, Stepfac 8170, Stepfac 8171, Stepfac 8173, Stepfac 8175, Stepfac 8180, Stepfac 8181, Stepfac TSP-PE, Stepfac TSP-PE-K, Stepfac TSP-PE-N, Zelec® AN and Zelec® LA-2 (all from Stepan; Northfield, IL), Klearfac® AA 270, Maphos® 58, Maphos® 60 A, Maphos® 66 H, Maphos® M 60, Agnique® PE 2EH-2k, Agnique® PE NP-4, Agnique® PE NP-6, Agnique® PE NP-9, Agnique® PE DNP-8, Agnique® PE IDA-6, Agnique® PE TDA-6, Agnique® PE 25, Agnique® PE 28, Agnique® PE 28-9N and Agnique® PE 68-5 (all from BASF; Florham Park, NJ), Duraphos 100, Duraphos 178, Lubrhophos LB 400, Lubrhophos LB/400-E, Lubrhophos LP/700 E, Lubrhophos RD/510-E, Rhodafac® AAP, Rhodafac® BN-936/S, Rhodafac® HA70, Rhodafac® LO-11/ALA, Rhodafac® LO/529-E, Rhodafac® PA 15, Rhodafac® PA 23, Rhodafac® PA 35, Rhodafac® PA/32, Rhodafac® PE 510, Rhodafac® RM 710, Rhodafac® RM/510-E, Rhodafac® RS 410, Rhodafac® RS 610-E, Rhodafac® RS 710, Rhodafac® RS-610/A25, Rhodafac® RS/710-E, Soprophor® 3 D 33, Trimethyl Phosphite HP and Trimethyl Phosphite (all from Rhodia; Cranberry, NJ), and the SURFONIC® PE series and the EMPIPHOS® series (both from Huntsman International LLC; The Woodlands, TX). The phosphate ester surfactant can be present in an amount from 1 g/kg to 200 g/kg, preferably from 1 g/kg to 100 g/kg of the total composition.

Examples of useful polymeric surfactants include: (1) ABA block copolymers having a hydrophilic portion of polyethylene oxide and a hydrophobic portion of poly(12-hydroxystearate), such as, for example, Atlox™ 4912 (Croda; Edison, NJ), having a molecular weight of about 5,000 and Termul™ 2510 (Huntsman International LLC; The Woodlands, TX); (2) polyvinyl alcohol resins with a degree of hydrolysis of 86-89%, such as, for example, Gohsenol GL03 and Gohsenol GL05 (The Nippon Synthetic Chemical Industry Co., Ltd.; Osaka, Japan); (3) methyl methacrylate graft copolymers, such as, for example, Atlox™ 4913 (Croda; Edison, NJ); (4) alkyd polyethylene oxide resins, such as, for example, Atlox™ 4914 (Croda; Edison, NJ) and the like; (5) EO-PO block copolymers, such as, for example, Atlas™ G-5000 (Croda; Edison, NJ), and the Pluronic® block copolymers (BASF; Florham Park, NJ), and the like; (6) alcohol alkoxylates, such as, for example, Termul™ 5429 (Huntsman International LLC; The Woodlands, TX). Especially useful polymeric surfactants include the ABA block copolymers and EO-PO block copolymers. The polymeric surfactant can be present in an amount from 1 g/kg to 200 g/kg, preferably from 1 g/kg to 50 g/kg of the total composition.

The aqueous herbicide spray mixtures disclosed herein may include insecticides, herbicides, herbicide safeners, or fungicides and the aqueous herbicide spray mixtures may be applied for the control of unwanted plants, fungi, or insects at levels dependent on the concentration of the active ingredient needed to control the target pest.

The aqueous herbicide spray mixtures as described herein may be applied in conjunction with one or more other active ingredients to control a wider variety of unwanted plants, fungi, or insects. When used in conjunction with the other active ingredients, the presently claimed compositions can be formulated with the other active ingredient or active ingredients as premix concentrates, tank mixed with the other active ingredient or active ingredients for spray application, or applied sequentially with the other active ingredient or active ingredients in separate spray applications.

An example of a composition as described herein that may be used in conjunction with another active ingredient comprises an aqueous pre-mix concentrate containing a mixture of an auxinic herbicide such as a water soluble salt of 2,4-D, a water soluble salt of triclopyr, a water soluble salt of dicamba, or mixtures thereof, and a fatty acid alkyl ester, fatty acid amide, and/or triglyceride fatty acid ester . Such aqueous pre-mix herbicidal concentrates may be diluted from 1 to 2000 fold in water at the point of use depending on the agricultural practices and used in spray applications to control weeds in crops.

In some situations, the aqueous herbicide spray mixtures may contain one or more biocides. Biocides may be present in the composition from about 0.001 wt% to about 0.1 wt%. In embodiments, the one or more biocides may be present in the composition at 0.001 wt%, 0.005 wt%, 0.01 wt%, 0.02 wt%,0.03 wt%, 0.04 wt%, 0.05 wt%, 0.06 wt%, 0.07 wt%, 0.08 wt%, 0.09 wt%, or 0.1 wt%. Examples of biocides include, but are not limited to, bactericides, viricides, fungicides, parasiticides, and the like. Examples of biocide active ingredients include, but are not limited to, phenol compounds (such as phenol, thymol, pentachlorophenol, cresol, and p-chloro-m-xylenol), aldehydic compounds (such as formaldehyde, glutaraldehyde, and paraformaldehyde), acid compounds (such as benzoic acid, sorbic acid, mucochloric acid, and mucobromic acid), esters of p-hydroxybenzoic acid (such as methyl-p-hydroxybenzoate and butyl-p-hydroxybenzoate), rare earth salts, amines, disulfides, heterocyclic compounds (such as thiazinium salts, thiazolinones, and benzimidazoles), quaternary ammonium salts, organic mercury compounds, hexamethylenebiguanide hydrochlorides, benzalkonium chlorides, polyamino propylbiguanides, and 1-2-benzisothiazoline-3-ones. For specific example, an aqueous herbicide spray mixture may comprise Proxel® GXL (Arch Chemicals Inc., Atlanta, GA) as a biocide.

As described above, aqueous herbicide spray mixtures described herein include auxinic herbicides (such as 2,4-D, 2,4-DB, aminopyralid, aminocyclopyrachlor, clopyralid, dicamba, fluroxypyr, halauxifen, MCPA, MCPB, picloram or triclopyr). Suitable active ingredients for use in the aqueous herbicide spray mixtures described herein also include acetochlor, atrazine, benfluralin, cloransulam, cyhalofop, diclosulam, dithiopyr, ethalfluralin, florasulam, flumetsulam, glufosinate, glyphosate, haloxyfop, isoxaben, MSMA, oryzalin, oxyfluorfen, pendimethalin, penoxsulam, propanil, pyroxsulam, quizalofop, tebuthiuron, and trifluralin. Suitable active ingredients for use in the described compositions also include herbicide safeners such as, for example, cloquintocet, flurazole, mefenpyr, and TI-35. Suitable active ingredients for use in the described compositions also include insecticides such as, for example, chlorpyrifos, chlorpyrifos-methyl, *gamma-*cyhalothrin, cypermethrin, deltamethrin, halofenozide, methoxyfenozide, sulfoxaflor, spinosad, spinetoram, and tebufenozide. Suitable active ingredients for use in the described compositions also include fungicides such as, for example, fenbuconazole, mancozeb, myclobutanil, propiconazole, quinoxyfen, thifluzamide, and zoxamide.

The aqueous herbicide spray mixtures described herein contain water soluble salts of auxinic herbicides, optionally in combination with the water soluble salt of glyphosate, and suitable cations contained in these salts include isopropyl ammonium, dimethyl ammonium, triethyl ammonium, monoethanol ammonium, diethanol ammonium, triethanol ammonium, dimethylethanol ammonium, diethyleneglycol ammonium, triisopropanol ammonium, tetramethyl ammonium, tetraethyl ammonium, choline, and potassium. For example, useful 2,4-D salts include the 2,4-D choline salt and the 2,4-D dimethyl ammonium salt, and useful glyphosate salts include the glyphosate dimethyl ammonium salt, the glyphosate isopropyl ammonium salt, and the glyphosate potassium salt.

In an example of an aqueous herbicide spray mixture, the auxinic herbicide is 2,4-D choline salt or 2,4-D dimethyl ammonium salt, the glyphosate is glyphosate dimethyl ammonium salt, glyphosate isopropyl ammonium salt, or glyphosate potassium salt, and the fatty acid alkyl ester, fatty acid amide, and/or triglyceride fatty acid ester is methyl caproate, methyl caprylate, methyl caprate, methyl laurate, methyl myristate, methyl palmitate, methyl stearate, methyl oleate, methyl linoleate, methyl linolenate, N,N-dimethylcaprylamide (N,N-dimethyloctanamide), N,N-dimethylcapramide (N,N-dimethyldecanamide), soybean oil, rapeseed oil, olive oil, almond oil, canola oil, omega-9 canola oil, castor oil, sunflower seed oil, coconut oil, corn oil, cotton seed oil, linseed oil, palm oil, peanut oil, safflower oil, sesame oil, tung oil, or mixtures thereof. In a further example of an aqueous herbicide spray mixture, the auxinic herbicide is 2,4-D choline salt, the glyphosate is glyphosate dimethyl ammonium salt, and, as defined above, the fatty acid alkyl ester, fatty acid amide, and/or triglyceride fatty acid ester is methyl caproate, methyl caprylate, methyl caprate, methyl laurate, methyl myristate, methyl palmitate, methyl stearate, methyl oleate, methyl linoleate, methyl linolenate, N,N-dimethylcaprylamide (N,N-dimethyloctanamide), N,N-dimethylcapramide (N,N-dimethyldecanamide), morpholine caprylaminde, morpholine capramide, soybean oil, rapeseed oil, olive oil, castor oil, sunflower seed oil, almond oil, canola oil, omega-9 canola oil, coconut oil, corn oil, cotton seed oil, linseed oil, palm oil, peanut oil, safflower oil, sesame oil, tung oil, or mixtures thereof.

The optimum spray droplet size depends on the application for which the herbicide composition is used. If droplets are too large, there will be less coverage by the spray; i.e, large droplets will land in certain areas while areas in between will receive little or no spray coverage. The maximum acceptable droplet size may depend on the amount of composition being applied per unit area and the need for uniformity in spray coverage. Smaller droplets provide more even coverage, but are more prone to drift during spraying. Thus, application parameters such as uniformity in spray coverage must be balanced against the tendency for smaller droplets to drift. For example, if it is particularly windy during spraying, larger droplets may be needed to reduce drift, whereas on a calmer day smaller droplets may be acceptable.

In addition to the physical properties of a particular aqueous herbicide composition, spray droplet size may also depend on the spray apparatus, e.g., nozzle size and configuration. The reduction in spray drift may result from a variety of factors including a reduction in the production of fine spray droplets (<150 µm minimum diameter) and an increase in the volume median diameter (VMD) of the spray droplets. In any event, for a given spray apparatus, application, and conditions, and based on the fatty acid alkyl ester, fatty acid amide, and/or triglyceride fatty acid ester, the median diameter of the plurality of spray droplets created using the compositions and methods described herein is increased above that of a spray composition that does not include the fatty acid alkyl ester, fatty acid amide, or triglyceride fatty acid ester as described herein.

In addition to the methods described above, aqueous herbicide concentrate compositions are also described. As used herein aqueous herbicide concentrate compositions are solutions containing high concentrations of an aqueous herbicide spray component described above, i.e., one or more water soluble herbicide salts and a fatty acid alkyl ester, fatty acid amide, and/or triglyceride fatty acid ester. The aqueous concentrate compositions are intended to be diluted to provide aqueous herbicide spray mixtures for use, for example, with the methods described herein.

The aqueous concentrate compositions described herein include from 5 to 90 weight percent of one or more water soluble salts of a herbicide which is an auxinic herbicide. Additional examples of concentrations for the herbicide incorporated into the aqueous herbicide concentrate mixture described herein include, from 5 to 85 weight percent of the concentrate mixture, from 5 to 80 weight percent of the concentrate mixture, from 5 to 75 weight percent of the concentrate mixture, from 5 to 70 weight percent of the concentrate mixture, from 5 to 65 weight percent of the concentrate mixture, from 5 to 60 weight percent of the concentrate mixture, from 5 to 55 weight percent of the concentrate mixture, from 5 to 50 weight percent of the concentrate mixture, from 5 to 45 weight percent of the concentrate mixture, from 5 to 40 weight percent of the concentrate mixture, from 5 to 35 weight percent of the concentrate mixture, from 5 to 30 weight percent of the concentrate mixture, from 5 to 25 weight percent of the concentrate mixture, and from 5 to 20 weight percent of the concentrate mixture. Further examples of concentrations for the herbicide incorporated into the aqueous herbicide concentrate mixture described herein include, from 10 to 90 weight percent of the concentrate mixture, from 15 to 90 weight percent of the concentrate mixture, from 20 to 90 weight percent of the concentrate mixture, from 25 to 90 weight percent of the concentrate mixture, from 30 to 90 weight percent of the concentrate mixture, from 35 to 90 weight percent of the concentrate mixture, from 40 to 90 weight percent of the concentrate mixture, from 45 to 90 weight percent of the concentrate mixture, from 50 to 90 weight percent of the concentrate mixture, from 55 to 90 weight percent of the concentrate mixture, from 60 to 90 weight percent of the concentrate mixture, from 65 to 90 weight percent of the concentrate mixture, from 70 to 90 weight percent of the concentrate mixture, from 75 to 90 weight percent of the concentrate mixture, from 80 to 90 weight percent of the concentrate mixture, and from 85 to 90 weight percent of the concentrate mixture. More examples of concentrations for the herbicide incorporated into the aqueous herbicide concentrate mixture described herein include, from 10 to 85 weight percent of the concentrate mixture, from 15 to 80 weight percent of the concentrate mixture, from 20 to 75 weight percent of the concentrate mixture, from 25 to 75 weight percent of the concentrate mixture, from 30 to 70 weight percent of the concentrate mixture, from 35 to 65 weight percent of the concentrate mixture, from 40 to 60 weight percent of the concentrate mixture, from 45 to 60 weight percent of the concentrate mixture, from 40 to 55 weight percent of the concentrate mixture, and from 45 to 55 weight percent of the concentrate mixture.

The aqueous concentrate compositions described herein include from 0.1 to 20 weight percent of a surfactant. Additional examples of concentrations for the surfactant incorporated into the aqueous herbicide concentrate mixture described herein include, from 0.1 to 19 weight percent of the concentrate mixture, from 0.1 to 18 weight percent of the concentrate mixture, from 0.1 to 17 weight percent of the concentrate mixture, from 0.1 to 16 weight percent of the concentrate mixture, from 0.1 to 15 weight percent of the concentrate mixture, from 0.1 to 14 weight percent of the concentrate mixture, from 0.1 to 13 weight percent of the concentrate mixture, from 0.1 to 12 weight percent of the concentrate mixture, from 0.1 to 11 weight percent of the concentrate mixture, from 0.1 to 10 weight percent of the concentrate mixture, from 0.1 to 9 weight percent of the concentrate mixture, from 0.1 to 8 weight percent of the concentrate mixture, from 0.1 to 7 weight percent of the concentrate mixture, from 0.1 to 6 weight percent of the concentrate mixture, from 0.1 to 5 weight percent of the concentrate mixture, from 0.1 to 4.5 weight percent of the concentrate mixture, from 0.1 to 4 weight percent of the concentrate mixture, from 0.1 to 3.5 weight percent of the concentrate mixture, from 0.1 to 3 weight percent of the concentrate mixture, from 0.1 to 2.5 weight percent of the concentrate mixture, from 0.1 to 2 weight percent of the concentrate mixture, from 0.1 to 1.5 weight percent of the concentrate mixture, and from 0.1 to 1 weight percent of the concentrate mixture. Further examples of concentrations for the surfactant incorporated into the aqueous herbicide concentrate mixture described herein include, from 0.2 to 20 weight percent of the concentrate mixture, from 0.3 to 20 weight percent of the concentrate mixture, from 0.4 to 20 weight percent of the concentrate mixture, from 0.5 to 20 weight percent of the concentrate mixture, from 0.6 to 20 weight percent of the concentrate mixture, from 0.7 to 20 weight percent of the concentrate mixture, from 0.8 to 20 weight percent of the concentrate mixture, from 0.9 to 20 weight percent of the concentrate mixture, from 1 to 20 weight percent of the concentrate mixture, from 1.5 to 20 weight percent of the concentrate mixture, from 2 to 20 weight percent of the concentrate mixture, from 3 to 20 weight percent of the concentrate mixture, from 4 to 20 weight percent of the concentrate mixture, from 5 to 20 weight percent of the concentrate mixture, from 6 to 20 weight percent of the concentrate mixture, from 7 to 20 weight percent of the concentrate mixture, from 8 to 20 weight percent of the concentrate mixture, from 9 to 20 weight percent of the concentrate mixture, from 10 to 20 weight percent of the concentrate mixture, from 11 to 20 weight percent of the concentrate mixture, from 12 to 20 weight percent of the concentrate mixture, from 13 to 20 weight percent of the concentrate mixture, from 14 to 20 weight percent of the concentrate mixture, from 15 to 20 weight percent of the concentrate mixture, from 16 to 20 weight percent of the concentrate mixture, from 17 to 20 weight percent of the concentrate mixture, from 18 to 20 weight percent of the concentrate mixture, and from 19 to 20 weight percent of the concentrate mixture. More examples of concentrations for the surfactant incorporated into the aqueous herbicide concentrate mixture described herein include, from 0.2 to 19 weight percent of the concentrate mixture, from 0.3 to 18 weight percent of the concentrate mixture, from 0.4 to 17 weight percent of the concentrate mixture, from 0.5 to 16 weight percent of the concentrate mixture, from 0.6 to 15 weight percent of the concentrate mixture, from 0.7 to 14 weight percent of the concentrate mixture, from 0.8 to 13 weight percent of the concentrate mixture, from 0.9 to 12 weight percent of the concentrate mixture, from 1 to 11 weight percent of the concentrate mixture, from 2 to 10 weight percent of the concentrate mixture, from 2 to 9 weight percent of the concentrate mixture, from 2 to 8 weight percent of the concentrate mixture, from 2 to 7 weight percent of the concentrate mixture, from 2 to 6 weight percent of the concentrate mixture, from 2 to 5 weight percent of the concentrate mixture, from 2 to 4 weight percent of the concentrate mixture, and from 2 to 3 weight percent of the concentrate mixture.

The aqueous concentrate compositions described herein include from 0.1 to 20 weight percent of a fatty acid alkyl ester, fatty acid amide, and/or triglyceride fatty acid ester. Additional examples of concentrations for the fatty acid alkyl ester, fatty acid amide, and/or triglyceride fatty acid ester incorporated into the aqueous herbicide concentrate mixture described herein include, from 0.1 to 19 weight percent of the concentrate mixture, from 0.1 to 18 weight percent of the concentrate mixture, from 0.1 to 17 weight percent of the concentrate mixture, from 0.1 to 16 weight percent of the concentrate mixture, from 0.1 to 15 weight percent of the concentrate mixture, from 0.1 to 14 weight percent of the concentrate mixture, from 0.1 to 13 weight percent of the concentrate mixture, from 0.1 to 12 weight percent of the concentrate mixture, from 0.1 to 11 weight percent of the concentrate mixture, from 0.1 to 10 weight percent of the concentrate mixture, from 0.1 to 9 weight percent of the concentrate mixture, from 0.1 to 8 weight percent of the concentrate mixture, from 0.1 to 7 weight percent of the concentrate mixture, from 0.1 to 6 weight percent of the concentrate mixture, from 0.1 to 5 weight percent of the concentrate mixture, from 0.1 to 4.5 weight percent of the concentrate mixture, from 0.1 to 4 weight percent of the concentrate mixture, from 0.1 to 3.5 weight percent of the concentrate mixture, from 0.1 to 3 weight percent of the concentrate mixture, from 0.1 to 2.5 weight percent of the concentrate mixture, from 0.1 to 2 weight percent of the concentrate mixture, from 0.1 to 1.5 weight percent of the concentrate mixture, and from 0.1 to 1 weight percent of the concentrate mixture. Further examples of concentrations for the fatty acid alkyl ester, fatty acid amide, and/or triglyceride fatty acid ester incorporated into the aqueous herbicide concentrate mixture described herein include, from 0.2 to 20 weight percent of the concentrate mixture, from 0.3 to 20 weight percent of the concentrate mixture, from 0.4 to 20 weight percent of the concentrate mixture, from 0.5 to 20 weight percent of the concentrate mixture, from 0.6 to 20 weight percent of the concentrate mixture, from 0.7 to 20 weight percent of the concentrate mixture, from 0.8 to 20 weight percent of the concentrate mixture, from 0.9 to 20 weight percent of the concentrate mixture, from 1 to 20 weight percent of the concentrate mixture, from 1.5 to 20 weight percent of the concentrate mixture, from 2 to 20 weight percent of the concentrate mixture, from 3 to 20 weight percent of the concentrate mixture, from 4 to 20 weight percent of the concentrate mixture, from 5 to 20 weight percent of the concentrate mixture, from 6 to 20 weight percent of the concentrate mixture, from 7 to 20 weight percent of the concentrate mixture, from 8 to 20 weight percent of the concentrate mixture, from 9 to 20 weight percent of the concentrate mixture, from 10 to 20 weight percent of the concentrate mixture, from 11 to 20 weight percent of the concentrate mixture, from 12 to 20 weight percent of the concentrate mixture, from 13 to 20 weight percent of the concentrate mixture, from 14 to 20 weight percent of the concentrate mixture, from 15 to 20 weight percent of the concentrate mixture, from 16 to 20 weight percent of the concentrate mixture, from 17 to 20 weight percent of the concentrate mixture, from 18 to 20 weight percent of the concentrate mixture, and from 19 to 20 weight percent of the concentrate mixture. More examples of concentrations for the fatty acid alkyl ester, fatty acid amide, and/or triglyceride fatty acid ester incorporated into the aqueous herbicide concentrate mixture described herein include, from 0.2 to 19 weight percent of the concentrate mixture, from 0.3 to 18 weight percent of the concentrate mixture, from 0.4 to 17 weight percent of the concentrate mixture, from 0.5 to 16 weight percent of the concentrate mixture, from 0.6 to 15 weight percent of the concentrate mixture, from 0.7 to 14 weight percent of the concentrate mixture, from 0.8 to 13 weight percent of the concentrate mixture, from 0.9 to 12 weight percent of the concentrate mixture, from 1 to 11 weight percent of the concentrate mixture, from 2 to 10 weight percent of the concentrate mixture, from 2 to 9 weight percent of the concentrate mixture, from 2 to 8 weight percent of the concentrate mixture, from 2 to 7 weight percent of the concentrate mixture, from 2 to 6 weight percent of the concentrate mixture, from 2 to 5 weight percent of the concentrate mixture, from 2 to 4 weight percent of the concentrate mixture, and from 2 to 3 weight percent of the concentrate mixture.

The aqueous concentrate compositions can be stored in suitable containers as will be readily recognized by one of skill in the art and can be, for example, solutions, emulsions, or suspensions.

In an example of an aqueous concentrate composition, the auxinic herbicide is 2,4-D choline salt or 2,4-D dimethyl ammonium salt, and the fatty acid alkyl ester, fatty acid amide, and/or triglyceride fatty acid ester is methyl caproate, methyl caprylate, methyl caprate, methyl laurate, methyl myristate, methyl palmitate, methyl stearate, methyl oleate, methyl linoleate, methyl linolenate, N,N-dimethylcaprylamide (N,N-dimethyloctanamide), N,N-dimethylcapramide (N,N-dimethyldecanamide), soybean oil, rapeseed oil, olive oil, castor oil, sunflower seed oil, almond oil, canola oil, omega-9 canola oil, coconut oil, corn oil, cotton seed oil, linseed oil, palm oil, peanut oil, safflower oil, sesame oil, tung oil, or mixtures thereof. In a further example of an aqueous concentrate composition, the auxinic herbicide is 2,4-D choline salt and the fatty acid alkyl ester, fatty acid amide, and/or triglyceride fatty acid ester is methyl caproate, methyl caprylate, methyl caprate, methyl laurate, methyl myristate, methyl palmitate, methyl stearate, methyl oleate, methyl linoleate, methyl linolenate, N,N-dimethylcaprylamide (N,N-dimethyloctanamide), N,N-dimethylcapramide (N,N-dimethyldecanamide), soybean oil, rapeseed oil, olive oil, castor oil, sunflower seed oil, almond oil, canola oil, omega-9 canola oil, coconut oil, corn oil, cotton seed oil, linseed oil, palm oil, peanut oil, safflower oil, sesame oil, tung oil, or mixtures thereof.

Aqueous spray solutions, containing 2,4-D and glyphosate are prone to incompatibility under certain conditions and concentrations leading to product performance issues and difficulty in using the products, i.e., difficulty with field applications of the products. Incompatibility in spray solutions may be minimized by the use of very small amounts of 2,4-D, such as less than about 3 wt% ae (acid equivalent) relative to the total composition and/or the use of compatibility additives such as is described in U.S. Application Serial No. 61/523,958.

Optionally, the compositions described herein may additionally contain surfactants. The surfactants may be anionic, cationic, or nonionic in character. Examples of typical surfactants include alcohol-alkylene oxide addition products, such as tridecyl alcohol-C₁₆ ethoxylate; sorbitol esters, such as sorbitol oleate; quaternary amines, such as lauryl trimethylammonium chloride; ethoxylated amines, such as tallowamine ethoxylated; betaine surfactants, such as cocoamidopropyl betaine; fatty acid amidopropyl dimethylamine surfactants such as cocoamidopropyl dimethylamine; alkylpolyglycoside surfactants; polyethylene glycol esters of fatty acids, such as polyethylene glycol stearate; and fatty acid esters of polyglycerol.

The additional surfactant or mixtures of surfactants optionally used in the described compositions are usually present at a concentration of from about 0.5 to about 20 weight percent of the formulation. Additionally, compositions optionally containing one or more additional compatible ingredients are provided herein. These additional ingredients may include, for example, one or more pesticides or other ingredients, which may be dissolved or dispersed in the composition and may be selected from acaricides, bactericides, fungicides, insecticides, herbicides, herbicide safeners, insect attractants, insect repellents, plant activators, plant growth regulators, and synergists. Also, any other additional ingredients providing functional utility such as, for example, dyes, stabilizers, fragrants, viscosity-lowering additives, compatibility agents, organic co-solvents such as, for example, propylene glycol, propylene glycol ethers and/or ethylene glycol ethers, and freeze-point depressants may be included in these compositions. The use of organic co-solvents in the concentrates and spray solutions described herein may provide freezing-point depression and/or enhanced emulsion stability to these compositions.

The following Examples are presented to illustrate various aspects of the compositions and methods described herein.

### Example 1 (Comparative Example not comprising a surfactant according to claim 1) 2,4-D choline aqueous concentrates with built-in fatty acid alkyl esters:

Aqueous herbicide concentrates containing 383 grams acid equivalent per kilogram (gae/kg) of 2,4-D choline, 40 g/kg of Ninate® 411 surfactant (Stepan; Northfield, IL), 2.5 g/kg of ethylenediaminetetraacetic acid choline salt (EDTA-choline; prepared by adding 1028.25 g of EDTA acid and 689.7 g of DI water into 2310.0 g of choline hydroxide solution (45 wt%) and stirring until all solids are dissolved), and 90 g/kg of one or more fatty acid alkyl esters (Table 1) were prepared as follows. A 4-oz vial was first charged with 9.00 g of a fatty acid ester. To the vial was added, 4.00 g of Ninate® 411, 86.00 g of a 44.5 wt% ae basis 2,4-D choline salt solution in water (prepared by dissolving 4171.0 g of 2,4-D acid flake (technical grade, 97.1 wt%) into 4789.4 g of choline hydroxide solution (45% aqueous solution) under low shear agitation to give a solution with a pH of 7.0 and a density of 1.21 g/mL) and finally 1.00 g of an EDTA-choline aqueous solution (25 wt%). The mixture was then homogenized using a Vibra-Cell™ ultrasonic processor (Sonics & Materials, Inc.; Newtown, CT) to provide 100 g of a homogenous herbicide concentrate.

**Table 1: Fatty acid Esters Used to Prepare the Aqueous Concentrates Described Herein**

| **Product** | **Chemical Name** | **Supplier** |
|---|---|---|
| Steposol® C-25 | methyl caprylate / caprate | Stepan^{a} |
| Steposol® C-42 | methyl laurate / myristate | Stepan |
| NA | methyl palmitate | Aldrich^{b} |

| | | |
|---|---|---|
| ^{a} Stepan; Northfield, IL. ^{b} Aldrich; St. Louis, MO. | | |

Three aqueous concentrates containing the fatty acid esters shown in Table 1 and one aqueous concentrate containing only 2,4-D choline and EDTA-choline (control sample) were prepared in this manner.

### 2,4-D Choline herbicide spray solutions and spray droplet analysis:

The three aqueous 2,4-D choline concentrates containing the fatty acid esters shown in Table 1 and the one aqueous concentrate containing only 2,4-D choline and EDTA-choline (control sample) were each tank-mixed with water alone (Spray solutions A in Table 2), with an aqueous solution of glyphosate potassium salt (Spray solutions B in Table 2) and with an aqueous solution of glyphosate potassium salt containing 2 weight percent ammonium sulfate (Spray solutions C in Table 2). Spray solutions A containing 1.87 % v/v 2,4-D choline were prepared by diluting 5.61 mL of each of the four 2,4-D choline concentrates with 294.39 mL of deionized water. Spray solutions B containing 1.87 % v/v 2,4-D choline and 1.66 % v/v glyphosate potassium were prepared by diluting 5.61 mL of each of the four 2,4-D choline concentrates with 4.99 mL of RoundUp PowerMax® (containing 540 gae/L of glyphosate potassium; Monsanto; St. Louis, MO) and 289.40 mL of deionized water. Spray solutions C containing 1.87 % v/v 2,4-D choline and 1.66 % v/v glyphosate potassium were prepared by diluting 5.61 mL of each of the four 2,4-D choline concentrates with 4.99 mL of RoundUp PowerMax® and 289.40 mL of a 2% ammonium sulfate (AMS) aqueous solution. All tank mixed spray solutions were lightly shaken by hand until each sample was homogenous. The nine herbicide spray solutions containing fatty acid esters and the three control samples without fatty acid esters were sprayed using a Teejet® 8002 flat fan nozzle (Teejet Technologies; Wheaton, IL) at 40 psi (276 kiloPascal) and the spray droplet size distribution measurement was made with a Sympatec Helos/KF high resolution laser diffraction particle sizer with an R7 lens (Sympatec GmbH; Clausthal-Zellerfeld, Germany). The tip of the nozzle was situated 12 inches (30.5 centimeters) above the path of the laser beam of the Sympatec particle sizer. The percentage of driftable fines was expressed as the volume percentage of spray droplets below 150 µm volume mean diameter (VMD) as shown in Table 2.

**Table 2: Spray Droplet Analysis of 2,4-D Herbicide Sprays Containing Fatty Acid Esters**

| **Fatty Acid Ester Used¹ (9 wt% in concentrate)** | **Herbicide Spray Droplet Analysis** | |
|---|---|---|
| | **Spray Droplet VMD, µm** | **Volume Percentage of Driftable Fines <150 µm VMD** |
| **Spray SolutionsA: 2,4-D choline** | | |
| none (control) | 167 | 43% |
| Steposol® C-25 | 152 | 48% |
| Steposol® C-42 | 153 | 49% |
| methyl palmitate | 258 | 18% |

| **Spray SolutionsB: 2,4-D choline + glyphosateK** | | |
|---|---|---|
| none (control) | 150 | 49% |
| Steposol® C-25 | 258 | 19% |
| Steposol® C-42 | 254 | 20% |
| methyl palmitate | 236 | 22% |

| **Spray Solutions C: 2,4-D choline + glyphosateK + AMS** | | |
|---|---|---|
| none (control) | 154 | 48% |
| Steposol® C-25 | 240 | 23% |
| Steposol® C-42 | 183 | 38% |
| methyl palmitate | 239 | 22% |

| | | |
|---|---|---|
| Steposol® C-25 and Steposol® C-42 are available from Stepan (Northfield, IL). | | |

### Example 2

### 2,4-D choline aqueous concentrates with built-in Permaflo™ biodiesel:

Aqueous herbicide concentrates containing 383 gae/kg of 2,4-D choline, 40 g/kg of Ninate® 411 surfactant (Stepan; Northfield, IL), 40 g/kg of propylene glycol (co-solvent), 10 g/kg of ethylenediaminetetraacetic acid choline salt (EDTA-choline), 2.5 g/kg of polymeric surfactant Atlox™ 4912 (Croda; Edison, NJ), 5.0 g/kg of surfactant Atplus™ 310 (Croda; Edison, NJ) and 10-40 g/kg of Permaflo™ biodiesel (Indiana Soybean Alliance, Inc.; Indianapolis, IN) were prepared as described. A 4-oz vial was first charged with 1.00-4.00 g of Permaflo™ biodiesel. To the vial were added, 4.00 g of Ninate® 411, 0.25 g of Atlox™ 4912, 0.50 g of Atplus™ 310, 86.00 g of a 44.5 wt% ae basis 2,4-D choline salt solution in water, 4.00 g of an EDTA-choline aqueous solution (25 wt%) and then enough water to provide a total sample weight of 100 g. The mixture was then homogenized using a Vibra-Cell™ ultrasonic processor (Sonics & Materials, Inc.; Newtown, CT) to provide a homogenous herbicide concentrate. Three aqueous concentrates containing 1-4 wt% each of Permaflo™ biodiesel and one aqueous concentrate containing only 2,4-D choline and EDTA-choline (control sample) were prepared in this manner. In a similar manner, 2 additional samples, each containing 2 wt% Permaflo™ biodiesel were prepared: one without the Atplus™ 310 surfactant and the other substituting Duomeen® T (AkzoNobel; Chicago, IL) for the Atplus™ 310. All of the other ingredients and amounts in the two additional samples were the same as described herein for the other Permaflo™ biodiesel samples.

### 2,4-D Choline herbicide spray solutions and spray droplet analysis:

The five aqueous 2,4-D choline concentrates containing Permaflo™ biodiesel and the one aqueous concentrate containing only 2,4-D choline and EDTA-choline (control sample) were each tank-mixed with water alone (Spray solutions A in Table 3), with an aqueous solution of glyphosate potassium salt (Spray solutions B in Table 3), and with an aqueous solution of glyphosate potassium salt containing 2 weight percent ammonium sulfate (Spray solutions C in Table 3). Spray solutions A containing 1.87 % v/v 2,4-D choline were prepared by diluting 5.61 mL of each of the six 2,4-D choline concentrates with 294.39 mL of deionized water. Spray solutions B containing 1.87 % v/v 2,4-D choline and 1.66 % v/v glyphosate potassium were prepared by diluting 5.61 mL of each of the six 2,4-D choline concentrates with 4.99 mL of RoundUp PowerMax® herbicide (containing 540 gae/L of glyphosate potassium; Monsanto; St. Louis, MO) and 289.40 mL of deionized water. Spray solutions C containing 1.87 % v/v 2,4-D choline and 1.66 % v/v glyphosate potassium were prepared by diluting 5.61 mL of each of the six 2,4-D choline concentrates with 4.99 mL of RoundUp PowerMax® herbicide and 289.40 mL of a 2% ammonium sulfate (AMS) aqueous solution. All tank mixed spray solutions were lightly shaken by hand until each sample was homogeneous. The 15 herbicide spray solutions containing Permaflo™ biodiesel and the three control samples without Permaflo™ biodiesel were sprayed as described in Example 1. The percentage of driftable fines was expressed as the volume percentage of spray droplets below 150 µm volume mean diameter (VMD) as shown in Table 3.

**Table 3: Spray Droplet Analysis of 2,4-D Herbicide Sprays Containing Fatty Acid Esters**

| **Amount of Permaflo™ Biodiesel¹ in Concentrate** | **Herbicide Spray Droplet Analysis** | |
|---|---|---|
| | **Spray Droplet VMD, µm** | **Volume Percentage of Driftable Fines <150 µm VMD** |
| **Spray Solutions A: 2,4-D choline** | | |
| none (control) | 167 | 43% |
| 4 wt% | 270 | 16% |
| 2 wt% | 264 | 18% |
| 1 wt% | 248 | 21% |
| 2 wt% (no Atplus 310)² | 275 | 14% |
| 2 wt% (Duomeen T in place of Atplus 310)² | 225 | 27% |

| **Spray Solutions B: 2,4-D choline + glyphosate K** | | |
|---|---|---|
| none (control) | 150 | 49% |
| 4 wt% | 252 | 19% |
| 2 wt% | 216 | 29% |
| 1 wt% | 178 | 40% |
| 2 wt% (no Atplus 310) ² | 214 | 29% |
| 2 wt% (Duomeen T in place of Atplus 310)² | 229 | 26% |

| **Spray Solutions C: 2,4-D choline + glyphosate K + AMS** | | |
|---|---|---|
| none (control) | 154 | 48% |
| 4 wt% | 220 | 28% |
| 2 wt% | 255 | 20% |
| 1 wt% | 243 | 23% |
| 2 wt% (no Atplus 310) ² | 257 | 17% |
| 2 wt% (Duomeen T in place of Atplus 310)² | 254 | 20% |

| | | |
|---|---|---|
| ¹Permaflo™ biodiesel is available from the Indiana Soybean Alliance, Inc. (Indianapolis, IN); ²Atplus™ 310 and Duomeen® T are available from Croda (Edison, NJ) and AkzoNobel (Chicago, IL), respectively. | | |

### Example 3

### 2,4-D choline aqueous concentrates with built-in rapeseed oil:

Aqueous herbicide concentrates containing 383 gae/kg of 2,4-D choline, 35 g/kg of propylene glycol (co-solvent), 5 g/kg of ethylenediaminetetraacetic acid choline salt (EDTA-choline), 2.5 g/kg of polymeric surfactants Atlox™ 4912 (Croda; Edison, NJ) and 2.5 g/kg of Tergitol™ XD (Dow Chemical; Midland, MI), 5.0 g/kg of surfactant Atplus™ 310 (Croda; Edison, NJ), and 40 g/kg of rapeseed oil (MP Biomedicals LLC; Solon, OH) were prepared as described. A 4-oz vial was first charged with 4.00 g of rapeseed oil. To the vial were added, 0.25 g of Tergitol™ XD, 0.25 g of Atlox™ 4912, 0.50 g of Atplus™ 310, 86.00 g of a 44.5 wt% (ae basis)of a 2,4-D choline salt solution in water, 2.00 g of an EDTA-choline aqueous solution (25 wt%) and then enough water to provide a total sample weight of 100 g. The mixture was then homogenized using a Vibra-Cell™ ultrasonic processor (Sonics & Materials, Inc.; Newtown, CT) to provide a homogenous herbicide concentrate. One aqueous concentrate containing 4 wt% rapeseed oil and one aqueous concentrate containing only 2,4-D choline and EDTA-choline (control sample) were prepared in this manner.

### 2,4-D Choline herbicide spray solutions and spray droplet analysis:

The aqueous 2,4-D choline concentrate containing rapeseed oil and the aqueous concentrate containing only 2,4-D choline and EDTA-choline (control sample) were each tank-mixed with water alone (Spray solutions A in Table 4), with an aqueous solution of glyphosate potassium salt (Spray solutions B in Table 4), and with an aqueous solution of glyphosate DMA salt (Spray solutions C in Table 4). Spray solutions A containing 1.87 % v/v 2,4-D choline were prepared by diluting 5.61 mL of each of 2,4-D choline concentrate with 294.39 mL of deionized water. Spray solutions B containing 1.87 % v/v 2,4-D choline and 1.66 % v/v glyphosate potassium were prepared by diluting 5.61 mL of each 2,4-D choline concentrate with 4.99 mL of RoundUp PowerMax® herbicide (containing 540 gae/L of glyphosate potassium; Monsanto; St. Louis, MO) and 289.40 mL of deionized water. Spray solutions C containing 1.87 % v/v 2,4-D choline and 1.87 % v/v glyphosate DMA were prepared by diluting 5.61 mL of each 2,4-D choline concentrate with 5.61 mL of Durango® DMA® herbicide (containing 480 gae/L of glyphosate dimethylamine salt; Dow AgroSciences; Indianapolis, IN) and 288.78 mL of deionized water. All tank mixed spray solutions were lightly shaken by hand until each sample was homogenous. The 3 herbicide spray solutions containing rapeseed oil and the three control samples without rapeseed oil were sprayed as described in Example 1. The percentage of driftable fines was expressed as the volume percentage of spray droplets below 150 µm volume mean diameter (VMD) as shown in Table 4.

**Table 4: Spray Droplet Analysis of 2,4-D Herbicide Sprays Containing Rapeseed Oil**

| **Amount of Rapeseed Oil in Concentrate** | **Herbicide Spray Droplet Analysis** | |
|---|---|---|
| | **Spray Droplet VMD, µm** | **Volume Percentage of Driftable Fines <150 µm VMD** |
| **Spray Solutions A: 2,4-D choline** | | |
| none (control) | 167 | 43% |
| 4 wt% | 261 | 19% |

| **Spray Solutions B: 2,4-D choline + glyphosate K** | | |
|---|---|---|
| none (control) | 150 | 49% |
| 4 wt% | 205 | 31% |

| **Spray SolutionsC: 2,4-D choline + glyphosateDMA** | | |
|---|---|---|
| none (control) | 160 | 46% |
| 4 wt% | 225 | 26% |

### Example 4

### 2,4-D choline aqueous concentrates containing built-in fatty acid alkyl esters:

Aqueous herbicide concentrates containing 383 gae/kg of 2,4-D choline, 40 g/kg of Ninate® 411 surfactant (available from Stepan; Northfield, IL), 2.5 g/kg of ethylenediaminetetraacetic acid choline salt, 2.5 g/kg of polymeric surfactant Atlox™ 4912 (Croda, Edison, NJ) and 5.0 g/kg of surfactant Atplus™ 310 (Croda, Edison, NJ), and 20-40 g/kg of two or more fatty acid alkyl esters (selected from Steposol® C-42, methyl palmitate and Agnique® ME 181-U (methyl oleate; BASF-Cognis; Cincinnati, OH)) were prepared as described. A 4-oz vial was first charged with 2.00-4.00 g of the fatty acid esters. To the vial was added 4.00 g of Ninate® 411, 0.25 g of Atlox™ 4912, 0.50 g of Atplus™ 310, 86.00 g of a 44.5 wt% ae basis 2,4-D choline salt solution in water, 1.00 g of an EDTA-choline aqueous solution (25 wt%) and then enough water to make 100 grams of the concentrate. The mixture was then homogenized using a Vibra-Cell™ ultrasonic processor (Sonics & Materials, Inc.; Newtown, CT) to provide a homogenous herbicide concentrate. Seven samples containing the fatty acid esters and one concentrate containing only 2,4-D and EDTA-choline (control sample) were prepared in this manner.

### 2,4-D Choline herbicide spray solutions and spray droplet analysis:

The 7 aqueous 2,4-D choline concentrates containing the fatty acid esters and the aqueous concentrate containing only 2,4-D choline and EDTA-choline (control sample) were tank-mixed with water alone (Spray solutions A in Table 5), with an aqueous solution of glyphosate potassium salt (Spray solutions B in Table 5), and with an aqueous solution of glyphosate K salt (Spray solutions C in Table 5) containing 2 wt% ammonium sulfate (AMS). Spray solutions A containing 1.87 % v/v 2,4-D choline were prepared by diluting 5.61 mL of each of the eight 2,4-D choline concentrates with 294.39 mL of deionized water. Spray solutions B containing 1.87 % v/v 2,4-D choline and 1.66 % v/v glyphosate potassium were prepared by diluting 5.61 mL of each of the eight 2,4-D choline concentrates with 4.99 mL of RoundUp PowerMax® herbicide (containing 540 gae/L of glyphosate potassium; Monsanto; St. Louis, MO) and 289.40 mL of deionized water. Spray solutions C containing 1.87 % v/v 2,4-D choline and 1.66 % v/v glyphosate potassium were prepared by diluting 5.61 mL of each of the eight 2,4-D choline concentrates with 4.99 mL of RoundUp PowerMax® herbicide and 289.4 mL of 2% aqueous ammonium sulfate. All tank mixed spray solutions were lightly shaken by hand until each sample was homogenous. The 21 herbicide spray solutions containing the fatty acid esters shown in Table 5 and the three control samples without the fatty acid esters were sprayed as described in Example 1. The percentage of driftable fines was expressed as the volume percentage of spray droplets below 150 µm volume mean diameter (VMD) as shown in Table 5.

**Table 5: Spray Droplet Analysis of 2,4-D Herbicide Sprays Containing Fatty Acid Esters**

| **Amount of Fatty Acid Esters in Concentrate¹** | **Spray Solutions A (2,4-D in water)** | | **Spray Solutions B (2,4-D + Glyphosate K in water)** | | **Spray Solutions C (294-D + Glyphosate K in 2 % AMS)** | |
|---|---|---|---|---|---|---|
| | Spray Droplet VMD, µm | Vol. % of Driftable Fines <150 µm VMD | Spray Droplet VMD, µm | Vol. % of Driftable Fines <150 µm VMD | Spray Droplet VMD, µm | Vol. % of Driftable Fines <150 µm VMD |
| None (control) | 167 | 43 % | 150 | 49 % | 154 | 48 % |
| Methyl palmitate (2 wt%) + Steposol® C-42 (2 wt%) | 268 | 17 % | 239 | 23 % | 229 | 25 % |
| Methyl palmitate (2 wt%) + Agnique® ME 181-U (2 wt%) | 270 | 16 % | 248 | 20 % | 242 | 22% |
| Steposol® C42 (2 wt%) + Agnique® ME 181-U (2 wt%) | 269 | 16 % | 244 | 21 % | 195 | 35 % |
| Methyl palmitate (1 wt%) + Steposol® C-42 (1 wt%) | 233 | 24 % | 167 | 43 % | 224 | 26% |
| Steposol® C42 (2 wt%) + Agnique® ME 181-U (1 wt%) | 264 | 17 % | 256 | 18 % | 217 | 28 % |
| Steposol® C42 (1 wt%) + Agnique® ME 181-U (2 wt%) | 278 | 13 % | 258 | 18 % | 224 | 26% |
| Steposol® C42 (1 wt%) + Agnique® ME 181-U (1 wt%) | 250 | 20 % | 230 | 24 % | 224 | 26% |

| | | | | | | |
|---|---|---|---|---|---|---|
| ¹Agnique® ME 181-U is available from BASF-Cognis (Cincinnati, OH); Steposol® C-42 is available from Stepan (Northfield, IL). | | | | | | |

### Example 5

### 2,4-D Choline aqueous concentrates containing built-in fatty acid alkyl esters:

Aqueous herbicide concentrates containing 383 gae/kg of 2,4-D choline, 40 g/kg of Ninate® 411 surfactant (Stepan; Northfield, IL), 2.5 g/kg of ethylenediaminetetraacetic acid choline salt, 2.5 g/kg of polymeric surfactant Atlox™ 4912 (Croda, Edison, NJ) and 40 or 92.5 g/kg of fatty acid alkyl esters (Agnique® 1218-U; mixture of C₁₂-C₁₈ fatty acid methyl esters; BASF-Cognis; Cincinnati, OH) were prepared as described. A 4-oz vial was first charged with 4.00 g or 9.25 g of Agnique® 1218-U. To the vial 4.00 g of Ninate® 411 and 0.25 g of Atlox® 4912 were added. Then, 86.00 g of a 44.5 wt% ae 2,4-D choline salt solution in water and 0.25 g of EDTA-choline solution (25 wt%) were added to the vial. Lastly, deionized water was added to provide 100 g of each herbicide concentrate. The mixtures were then homogenized using ultrasonic processor (Sonics, Vibra-Cell). Two samples containing the fatty acid esters and one concentrate containing only 2,4-D and EDTA-choline (control sample) were prepared in this manner.

### 2,4-D Choline herbicide spray solutions and spray droplet analysis:

The 2 aqueous 2,4-D choline concentrates containing the fatty acid esters and the aqueous concentrate containing only 2,4-D choline and EDTA-choline (control sample) were tank-mixed with water alone (Spray solutions A in Table 6), with an aqueous solution of glyphosate potassium salt (Spray solutions B in Table 6), and with an aqueous solution of glyphosate K salt (Spray solutions C in Table 6) containing 2 wt% ammonium sulfate (AMS). Spray solutions A containing 1.87 % v/v 2,4-D choline were prepared by diluting 5.61 mL of each 2,4-D choline concentrate with 294.39 mL of deionized water. Spray solutions B containing 1.87 % v/v 2,4-D choline and 1.66 % v/v glyphosate potassium were prepared by diluting 5.61 mL of each 2,4-D choline concentrate with 4.99 mL of RoundUp PowerMax® herbicide (containing 540 gae/L of glyphosate potassium; Monsanto; St. Louis, MO) and 289.40 mL of deionized water. Spray solutions C containing 1.87 % v/v 2,4-D choline and 1.66 % v/v glyphosate potassium were prepared by diluting 5.61 mL of each 2,4-D choline concentrates with 4.99 mL of RoundUp PowerMax® herbicide and 289.4 mL of 2% aqueous ammonium sulfate. All tank mixed spray solutions were lightly shaken by hand until each sample was homogenous. The 6 herbicide spray solutions containing the fatty acid esters shown in Table 6 and the three control samples without the fatty acid esters were sprayed as described in Example 1. The percentage of driftable fines was expressed as the volume percentage of spray droplets below 150 µm volume mean diameter (VMD) as shown in Table 6.

**Table 6: Spray Droplet Analysis of 2,4-D Herbicide Sprays Containing Fatty Acid Esters**

| **Amount of Agnique® 1218-U in Concentrate¹** | **Herbicide Spray Droplet Analysis** | |
|---|---|---|
| | **Spray Droplet VMD, µm** | **Volume Percentage of Driftable Fines <150 µm VMD** |
| **Spray Solutions A: 2,4-D choline** | | |
| none (control) | 167 | 43% |
| 4 wt% | 254 | 19% |
| 9.25 wt% | 266 | 17% |

| **Spray Solutions B: 2,4-D choline + glyphosate K** | | |
|---|---|---|
| none (control) | 150 | 49% |
| 4 wt% | 226 | 26% |
| 9.25 wt% | 259 | 18% |

| **Spray Solutions C: 2,4-D choline + glyphosate K + 2% AMS** | | |
|---|---|---|
| none (control) | 154 | 48% |
| 4 wt% | 162 | 45% |
| 9.25 wt% | 241 | 23% |

| | | |
|---|---|---|
| ¹Agnique® 1218-U is available from BASF-Cognis (Cincinnati, OH) | | |

### Example 6 (Comparative Example not comprising a surfactant according to claim 1)

### 2,4-D Choline aqueous concentrates containing built-in fatty acid amides:

To 9.0 g of an aqueous 2,4-D choline salt concentrate, (538 g ae/L) was added 1.0 g of Agnique® AMD 810 (BASF-Cognis; Cincinnati, OH). After brief agitation a clear homogeneous concentrate resulted. A 400 g quantity of spray solution was prepared by adding the concentrate (2.2% of the total weight of spray solution) to deionized water to form a hazy blue emulsion. The hazy blue emulsion and a control sample containing only 2,4-D choline salt were sprayed as described in Example 1. The percentage of driftable fines was expressed as the volume percentage of spray droplets below 150 µm volume mean diameter (VMD) as shown in Table 7.

**Table 7: Spray Droplet Analysis of 2,4-D Herbicide Sprays Containing Fatty Acid Dialkylamides**

| **Auxinic Herbicide/Fatty Acid Dialkylamide** | **Volume Percent Driftable Fines < 150 µm VMD** |
|---|---|
| 2,4-D choline/Agnique® AMD 810¹ | 39 |
| 2,4-D choline (control) | 45 |

| | |
|---|---|
| ¹Agnique® AMD 810 is available from BASF-Cognis (Cincinnati, OH) | |

### Example 7

### 2,4-D Choline aqueous concentrates with built-in canola oil:

Aqueous herbicide concentrates containing 383 gae/kg of 2,4-D choline, 35 g/kg of propylene glycol (co-solvent), 12.5 g/kg of ethylenediaminetetraacetic acid choline salt (EDTA-choline), 2.5 g/kg of polymeric surfactants Atlox™ 4912 (Croda; Edison, NJ) and 2.5 g/kg of Atlas G-5000 (Croda; Edison, NJ), 10 g/kg of Ninate® 411 surfactant (available from Stepan; Northfield, IL), and 40 g/kg of canola oil (Dow AgroSciences LLC; Indianapolis, IN) were prepared as described. A 4-oz vial was first charged with 4.00 g of canola oil. To the vial were added, 0.25 g of Atlas G-5000, 0.25 g of Atlox™ 4912, 1.00 g of Ninate® 411, 86.00 g of a 44.5 wt% (ae basis) of a 2,4-D choline salt solution in water, 3.50 g of propylene glycol, and 5.00 g of an EDTA-choline aqueous solution (25 wt%) to provide a total sample weight of 100 g. The mixture was then homogenized using a Vibra-Cell™ ultrasonic processor (Sonics & Materials, Inc.; Newtown, CT) to provide a homogenous herbicide concentrate. One aqueous concentrate containing 4 wt% canola oil and one aqueous concentrate containing only 2,4-D choline and EDTA-choline (control sample) were prepared in this manner.

### 2,4-D Choline herbicide spray solutions and spray droplet analysis:

The aqueous 2,4-D choline concentrate containing canola oil and the aqueous concentrate containing only 2,4-D choline and EDTA-choline (control sample) were each tank-mixed with water alone (Spray solutions A in Table 8), with an aqueous solution of glyphosate potassium salt (Spray solutions B in Table 8), and with an aqueous solution of glyphosate DMA salt (Spray solutions C in Table 8). Spray solutions A containing 1.87 % v/v 2,4-D choline were prepared by diluting 5.61 mL of each 2,4-D choline concentrate with 294.39 mL of deionized water. Spray solutions B containing 1.87 % v/v 2,4-D choline and 1.66 % v/v glyphosate potassium were prepared by diluting 5.61 mL of each 2,4-D choline concentrate with 4.99 mL of RoundUp PowerMax® herbicide (containing 540 gae/L of glyphosate potassium; Monsanto; St. Louis, MO) and 289.40 mL of deionized water. Spray solutions C containing 1.87 % v/v 2,4-D choline and 1.87 % v/v glyphosate DMA were prepared by diluting 5.61 mL of each 2,4-D choline concentrate with 5.61 mL of Durango® DMA® herbicide (containing 480 gae/L of glyphosate dimethylamine salt; Dow AgroSciences; Indianapolis, IN) and 288.78 mL of deionized water. All tank mixed spray solutions were lightly shaken by hand until each sample was homogenous. The 3 herbicide spray solutions containing canola oil and the three control samples without canola oil were sprayed as described in Example 1. The percentage of driftable fines was expressed as the volume percentage of spray droplets below 150 µm volume mean diameter (VMD) as shown in Table 8.

**Table 8: Spray Droplet Analysis of 2,4-D Herbicide Sprays Containing Canola Oil**

| **Amount of Canola Oil in Concentrate** | **Herbicide Spray Droplet Analysis** | |
|---|---|---|
| | **Spray Droplet VMD, µm** | **Volume Percentage of Driftable Fines <150 µm VMD** |
| **Spray Solutions A: 2,4-D choline** | | |
| none (control) | 161 | 45% |
| 4 wt% | 271 | 19% |

| **Spray Solutions B: 2,4-D choline + glyphosateK** | | |
|---|---|---|
| none (control) | 150 | 49% |
| 4 wt% | 211 | 30% |

| **Spray Solutions C: 2,4-D choline + glyphosate DMA** | | |
|---|---|---|
| none (control) | 160 | 46% |
| 4 wt% | 224 | 27% |

### Example 8

### 2,4-D Choline herbicide concentrates containing built-in vegetable oils:

Aqueous herbicide concentrates containing 383 gae/kg of 2,4-D choline, 40 g/kg of Atlox DP 13/6 surfactant (Croda; Edison, NJ), 20 g/kg of propylene glycol (co-solvent), 9.625 g/kg of ethylenediaminetetraacetic acid choline salt (EDTA-choline; prepared by adding 1028.25 g of EDTA acid and 689.7 g of DI water into 2310.0 g of choline hydroxide solution (45 wt%) and stirring until all solids are dissolved), 2.5 g/kg of polymeric surfactant Atlox™ 4912 (Croda; Edison, NJ), 19 g/kg of choline hydroxide (Aldrich) and 20 g/kg of plant oil were prepared as described. A 4-oz vial (Vial A) was first charged with 2 g of a plant oil. To Vial A were then added, 4.00 g of Atlox DP 13/6, 0.25 g of Atlox™ 4912, and 2.00 g of propylene glycol, the mixture formed was stirred with an overhead mixer until a homogenous solution was formed. To a second 4-oz (Vial B) were added 86.00 g of a 44.5 wt% ae basis 2,4-D choline salt solution in water, 3.85 g of an EDTA-choline aqueous solution (25 wt%), 1.90 g of choline hydroxide (45 wt% in water), and the ingredients of Vial A to provide a total sample weight of 100 g. The resulting mixture in Vial B was then mixed with overhead agitator to provide a homogenous herbicide concentrate with built-in plant oil. Five aqueous herbicide concentrates containing omega-9 canola oil, canola oil, soybean oil, safflower oil or almond oil and one aqueous control concentrate where the 2 wt% of plant oil was substituted with water were prepared in this manner.

**Table 9. Composition of 2,4-D Choline Herbicide Concentrates Containing Built-in Plant Oil**

| **Component** | **wt%** |
|---|---|
| 2,4-D Choline Solution | 86.00% |
| Propylene glycol | 2.00% |
| Atlox DP13/6 | 4.00% |
| EDTA-choline (25 wt%) | 3.85% |
| Plant oil | 2.00% |
| Atlox 4912 | 0.25% |
| Choline OH (45 wt%) | 1.90% |
| Total | 100.00% |

### 2,4-D Choline herbicide spray solutions and spray droplet analysis:

The five aqueous 2,4-D choline concentrates containing plant oil and the one aqueous control sample were each tank-mixed with water alone (Spray solutions A in Table 10), with an aqueous solution of glyphosate potassium salt (Spray solutions B in Table 10), and with an aqueous solution of glyphosate dimethylamine (DMA) (Spray solutions C in Table 10). Spray solutions A containing 1.87 % v/v of 2,4-D choline concentrate were prepared by diluting 5.61 mL of each of the six 2,4-D choline concentrates with 294.39 mL of deionized water. Spray solutions B containing 1.87 % v/v of 2,4-D choline concentrate and 2.78 % v/v of glyphosate potassium concentrate were prepared by diluting 5.61 mL of each of the six 2,4-D choline concentrates with 8.34 mL of Roundup PowerMax® herbicide (containing 540 gae/L of glyphosate potassium; Monsanto; St. Louis, MO) and 286.05 mL of deionized water. Spray solutions C containing 1.87 % v/v of 2,4-D choline concentrate and 3.125 % v/v of glyphosate DMA concentrate were prepared by diluting 5.61 mL of each of the six 2,4-D choline concentrates with 9.375 mL of Durango® herbicide (containing 480 gae/L glyphosate DMA, Dow AgroSciences, Indianapolis, IN) and 285.015 mL of deionized water. All tank mixed spray solutions were lightly shaken by hand until each sample was homogenous. The 15 herbicide spray solutions containing vegetable oils and the three control samples without plant oils were sprayed as described in Example 1. The percentage of driftable fines was expressed as the volume percentage of spray droplets below 150 µm volume mean diameter (VMD) as shown in Table 10.

**Table 10: Spray Droplet Analysis of 2,4-D Herbicide Sprays Containing Vegetable Oils**

| **Plant oil Used¹ (2 wt% in concentrate)** | **Herbicide Spray Droplet Analysis** | |
|---|---|---|
| | **Spray Droplet VMD, µm** | **Volume Percentage of Driftable Fines <150 µm VMD** |
| **Spray Solutions A: 2,4-D choline** | | |
| none (control) | 160 | 45 |
| Omega-9 Canola oil | 272 | 15 |
| Canola oil | 263 | 17 |
| Soybean oil | 265 | 17 |
| Safflower oil | 272 | 15 |
| Almond oil | 273 | 16 |

| **Spray Solutions B: 2,4-D choline + glyphosate K** | | |
|---|---|---|
| none (control) | 144 | 52 |
| Omega-9 Canola oil | 236 | 21 |
| Canola oil | 224 | 25 |
| Soybean oil | 206 | 30 |
| Safflower oil | 231 | 23 |
| Almond oil | 229 | 23 |

| **Spray Solutions C: 2,4-D choline + glyphosate DMA** | | |
|---|---|---|
| none (control) | 148 | 50 |
| Omega-9 Canola oil | 241 | 19 |
| Canola oil | 241 | 20 |
| Soybean oil | 229 | 24 |
| Safflower oil | 245 | 19 |
| Almond oil | 245 | 20 |

### Example 9

### 2,4-D choline herbicide concentrates with varied loadings of omega-9 canola oil:

Aqueous herbicide concentrates containing 383 gae/kg of 2,4-D choline, 40 g/kg of Atlox DP 13/6 surfactant (Croda; Edison, NJ), 20 g/kg of propylene glycol (co-solvent), 2.5 g/kg of polymeric surfactant Atlox™ 4912 (Croda; Edison, NJ), 19 g/kg of choline hydroxide (Aldrich) and 10-20 g/kg of omega-9 canola oil (Dow AgroSciences, Indianapolis, IN) were prepared as described. A 4-oz vial (Vial A) was first charged with 1, 1.5 or 2 g of omega-9 canola oil. To the vial were added, 4.00 g of Atlox DP 13/6, 0.25 g of Atlox™ 4912, 2.00 g of propylene glycol, the mixture was stirred with overhead mixer until a homogenous solution forms. To a second 4-oz vial (Vial B) were added 86.00 g of a 44.5 wt% ae basis 2,4-D choline salt solution in water, 3.85 to 4.85 g of an EDTA-choline aqueous solution (25 wt%), 1.90 g of choline hydroxide (45 wt%), and the ingredient of (Vial A) to provide a total sample weight of 100 g. The resulting mixture was then mixed with an overhead agitator to provide a homogenous herbicide concentrate with built-in omega-9 canola oil (Table 11).

**Table 11. Composition of 2,4-D Choline Herbicide Concentrates with Varied Loadings of Ome2a-9 Canola Oil**

| **Component** | **Wt%** |
|---|---|
| 2,4-D Choline Solution | 86.00% |
| Propylene glycol | 2.00% |
| Atlox DP13/6 | 4.00% |
| EDTA-choline (25 wt%) | 3.85 - 4.85% |
| Omega-9 canola oil | 1 - 2 % |
| Atlox 4912 | 0.25% |
| Choline OH (45 wt%) | 1.90% |
| Total | 100.00% |

Three aqueous concentrates containing 2 wt%, 1.5 wt%, and 1 wt% of omega-9 canola oil and one aqueous control concentrate where the omega-9 canola oil was substituted with water were prepared in this manner.

### 2,4-D Choline herbicide spray solutions and spray droplet analysis:

The three aqueous 2,4-D choline concentrates containing omega-9 canola oil and one aqueous control sample were each tank-mixed with water alone (Spray solutions A in Table 12), with an aqueous solution of glyphosate potassium salt (Spray solutions B in Table 12), and with an aqueous solution of glyphosate dimethylamine (DMA) (Spray solutions C in Table 12). Spray solutions A containing 1.87 % v/v of 2,4-D choline concentrate were prepared by diluting 5.61 mL of each of the four 2,4-D choline concentrates with 294.39 mL of deionized water. Spray solutions B containing 1.87 % v/v of 2,4-D choline concentrate and 2.78 % v/v of glyphosate potassium concentrate were prepared by diluting 5.61 mL of each of the four 2,4-D choline concentrates with 8.34 mL of RoundUp PowerMax® herbicide (containing 540 gae/L of glyphosate potassium; Monsanto; St. Louis, MO) and 286.05 mL of deionized water. Spray solutions C containing 1.87 % v/v of 2,4-D choline concentrate and 3.125 % v/v of glyphosate DMA concentrate were prepared by diluting 5.61 mL of each of the four 2,4-D choline concentrates with 9.375 mL of Durango® herbicide (containing 480 gae/L glyphosate DMA, Dow AgroSciences, Indianapolis, IN) and 285.015 mL of deionized water. All tank mixed spray solutions were lightly shaken by hand until each sample was homogenous. The 9 herbicide spray solutions containing varied loadings of the omega-9 canola oil and the three control samples without omega-9 canola oil were sprayed using the method described in Example 1. The percentage of driftable fines was expressed as the volume percentage of spray droplets below 150 µm volume mean diameter (VMD) as shown in Table 12.

**Table 12: Spray Droplet Analysis of 2,4-D Herbicide Sprays Containing Ome2a-9 Canola Oil**

| **Concentration of Omega-9 Canola Oil in 2,4-D Concentrate** | **Herbicide Spray Droplet Analysis** | |
|---|---|---|
| | **Spray Droplet VMD, µm** | **Volume Percentage of Driftable Fines <150 µm VMD** |
| **Spray Solutions A: 2.4-D choline** | | |
| none (control) | 160 | 45 |
| 2 wt% | 272 | 15 |
| 1.5 wt% | 265 | 18 % |
| 1 wt% | 245 | 30 |

| **Spray Solutions B: 2.4-D choline + glyphosateK** | | |
|---|---|---|
| none (control) | 144 | 52 |
| 2 wt% | 236 | 21 |
| 1.5 wt% | 234 | 22 |
| 1 wt% | 178 | 36 |

| **Spray Solutions C: 2.4-D choline + glyphosate DMA** | | |
|---|---|---|
| none (control) | 148 | 50 |
| 2 wt% | 241 | 19 |
| 1.5 wt% | 248 | 20 |
| 1 wt% | 213 | 33 |

### Example 10

### 2,4-D choline herbicide concentrates with omega-9 canola oil and varied phosphate ester surfactants:

Aqueous herbicide concentrates containing 383 gae/kg of 2,4-D choline, 40 g/kg of a phosphate ester surfactant (Croda; Edison, NJ), 20 g/kg of propylene glycol (co-solvent), 2.5 g/kg of polymeric surfactant Atlox™ 4912 (Croda; Edison, NJ), from 0 g/kg to 37.5 g/kg of choline hydroxide (45wt% solution, Aldrich), 20 g/kg of omega-9 canola oil (Dow AgroSciences, Indianapolis, IN), and from 5 g/kg to 14.375 g/kg of EDTA choline salt were prepared as described. A 4-oz vial (Vial A) was first charged with 2 g of omega-9 canola oil. To the vial were added, 4.00 g of a phosphate ester surfactant (Table 14), 0.25 g of Atlox™ 4912, and 2.00 g of propylene glycol, and the mixture was stirred with overhead mixer until a homogenous solution formed. To a second 4-oz vial (Vial B) were added 86.00 g of a 44.5 wt% ae basis 2,4-D choline salt solution in water and the ingredients in Vial A. The resulting mixture was then mixed with an overhead agitator and from 0 g to 3.75 g of choline hydroxide (45 wt% solution) was added to the mixture until the pH of the mixture was 7. The remaining 2 g to 5.75 g of EDTA choline (25 wt% solution) was then added to provide a total sample weight of 100 g.

**Table 13. Composition of 2,4-D Choline Herbicide Concentrates with Varied Loadings of Ome2a-9 Canola Oil**

| **Components** | **Wt%** |
|---|---|
| 2,4-D Choline Solution | 86.00% |
| Propylene glycol | 2.00% |
| Phosphate ester surfactant | 4.00% |
| EDTA-choline (25 wt%) | 2-5.75% |
| Omega-9 canola oil | 2% |
| Atlox 4912 | 0.25% |
| Choline OH (45 wt%) | 0-3.75% |
| Total | 100.00% |

Twelve aqueous herbicide concentrates containing omega-9 canola oil and a phosphate ester surfactant (from those listed in Table 14), and one aqueous control concentrate where the omega-9 canola oil was substituted with water and containing no phosphate ester surfactant were prepared in this manner.

### 2,4-D Choline herbicide spray solutions and spray droplet analysis:

The twelve aqueous 2,4-D choline concentrates containing a phosphate ester surfactant and the one aqueous control sample were each tank-mixed with water alone (Spray solutions A in Table 14), with an aqueous solution of glyphosate potassium salt (Spray solutions B in Table 14), and with an aqueous solution of glyphosate dimethylamine (DMA) (Spray solutions C in Table 14). Spray solutions A containing 1.87 % v/v of 2,4-D choline concentrate were prepared by diluting 5.61 mL of each of the 13 2,4-D choline concentrates with 294.39 mL of deionized water. Spray solutions B containing 1.87 % v/v of 2,4-D choline concentrate and 2.78 % v/v of glyphosate potassium concentrate were prepared by diluting 5.61 mL of each of the 13 2,4-D choline concentrates with 8.34 mL of RoundUp PowerMax® herbicide (containing 540 gae/L of glyphosate potassium; Monsanto; St. Louis, MO) and 286.05 mL of deionized water. Spray solutions C containing 1.87 % v/v of 2,4-D choline concentrate and 3.125 % v/v of glyphosate DMA concentrate were prepared by diluting 5.61 mL of each of the 13 2,4-D choline concentrates with 9.375 mL of Durango® herbicide (containing 480 gae/L glyphosate DMA, Dow AgroSciences, Indianapolis, IN) and 285.015 mL of deionized water. All tank mixed spray solutions were lightly shaken by hand until each sample was homogenous. The 36 herbicide spray solutions containing the phosphate ester surfactants and the three control samples without omega-9 canola oil were sprayed using the method described in Example 1. The percentage of driftable fines was expressed as the volume percentage of spray droplets below 150 µm volume mean diameter (VMD) as shown in Table 14.

**Table 14: Spray Droplet Analysis of 2,4-D Herbicide Sprays Containing Ome2a-9 Canola Oil and Various Phosphate Ester Surfactants**

| **Phosphate ester surfactants¹** (4 wt% in concentrate) | **Spray Solutions A (2,4-D choline)** | **Spray Solutions B (2,4-D + glyphosate K)** | **Spray Solutions C (2,4-D + glyphosate DMA)** |
|---|---|---|---|
| | Volume Percentage of Driftable Fines (<150 µm VMD) | Volume Percentage of Driftable Fines (<150 µm VMD) | Volume Percentage of Driftable Fines (<150 µm VMD) |
| control² | 45 | 52 | 50 |
| Atplus 310 | 18 | 23 | 19 |
| Atlox AL-3382 | 19 | 28 | 20 |
| Atlox DP13/6 | 15 | 21 | 19 |
| Crodafos O3A | 14 | 24 | 19 |
| Crodafos T6A | 17 | 22 | 19 |
| Multitrope 1214 | 18 | 27 | 23 |
| Crodafos C10/5A | 15 | 22 | 20 |
| Crodafos D4A | 16 | 24 | 20 |
| Crodafos O5A | 15 | 23 | 20 |
| Crodafos T5A | 16 | 25 | 20 |
| Crodafos O10A | 16 | 20 | 19 |
| Crodafos O10D | 16 | 24 | 19 |

| | | | |
|---|---|---|---|
| **¹** Phosphate ester surfactants are available from Croda (Edison, NJ); **²**The control spray solutions contain no phosphate ester surfactant and no Omega-9 canola oil. | | | |

### Example 11

### 2,4-D choline and 2,4-D DMA herbicide concentrates containing built-in omega-9 canola oil:

**Concentrate A:** An aqueous herbicide concentrate containing 383 gae/kg of 2,4-D choline, 40 g/kg of Atlox DP 13/6 surfactant (Croda; Edison, NJ), 20 g/kg of propylene glycol (co-solvent), 9.625 g/kg of ethylenediaminetetraacetic acid choline salt, 2.5 g/kg of polymeric surfactant Atlox™ 4912 (Croda; Edison, NJ), 19 g/kg of choline hydroxide (Aldrich) and 20 g/kg of omega-9 canola oil (Dow AgroSciences, Indianapolis, IN) were prepared as described. A 4-oz vial (Vial A) was first charged with 2 g of omega-9 canola oil. To the vial were added, 4.00 g of Atlox DP 13/6, 0.25 g of Atlox™ 4912, and 2.00 g of propylene glycol, and the mixture was stirred with an overhead mixer until a homogenous solution formed. To the second 4-oz vial (Vial B) were added 86.00 g of a 44.5 wt% ae basis 2,4-D choline salt solution in water, 3.85 g of an EDTA-choline aqueous solution (25 wt%), 1.90 g of choline hydroxide (45 wt%), and the ingredients in Vial A to provide a sample with a total sample of 100 g. The resulting mixture in Vial B was then mixed with an overhead agitator to provide a homogenous herbicide concentrate with built-in omega-9 canola oil.

**Concentrate B:** An aqueous herbicide concentrate containing 560 gae/kg of 2,4-D DMA, 40 g/kg of Atlox DP 13/6 surfactant (Croda; Edison, NJ), 63.5 g/kg of propylene glycol (co-solvent), 10 g/kg of ethylenediaminetetraacetic acid choline salt, 2.5 g/kg of polymeric surfactant Atlox™ 4912 (Croda; Edison, NJ), 5.6 g/kg of dimethylamine (Aldrich) and 20 g/kg of omega-9 canola oil (Dow AgroSciences, Indianapolis, IN) was prepared as described. A 4-oz vial was first charged with 2 g of omega-9 canola oil. To the vial were added, 4.00 g of Atlox DP 13/6, 0.25 g of Atlox™ 4912 and 6.35 g of propylene glycol, and the mixture was stirred with an overhead mixer until a homogenous solution formed. To a second 4-oz vial were added 82.00 g of a 55.32 wt% ae basis 2,4-D DMA salt solution in water, 4.00 g of an EDTA-choline aqueous solution (25 wt%), 1.40 g of dimethylamine solution (DMA, 40 wt% in water) and the ingredients in the first vial to provide a sample with a total weight of 100 g. The mixture was then mixed with an overhead agitator to provide a homogenous herbicide concentrate with built-in omega-9 canola oil.

**Table 15. Compositions of 2,4-D choline and 2,4-D DMA Herbicide Concentrates with Ome2a-9 Canola Oil**

| **Component** | **Concentrate A (wt%)** | **Concentrate B (wt%)** |
|---|---|---|
| 2,4-D Choline Solution | 86.00 | - |
| 2,4-D DMA Solution | - | 82.00 |
| Propylene glycol | 2.00 | 6.35 |
| Atlox DP 13/6 | 4.00 | 4.00 |
| EDTA-choline (25 wt%) | 3.85 | 4.00 |
| Omega-9 canola oil | 2.00 | 2.00 |
| Atlox 4912 | 0.25 | 0.25 |
| Choline OH (45 wt%) | 1.90 | - |
| DMA (40 wt%) | - | 1.40 |
| Total | 100.00 | 100.00 |

Two aqueous 2,4-D choline and 2,4-D DMA concentrates containing omega-9 canola oil and two aqueous control concentrates where the omega-9 canola oil was substituted with water were prepared in this manner.

### 2,4-D herbicide spray solutions containing additional herbicides and spray droplet analysis:

The two aqueous 2,4-D salt concentrates containing omega-9 canola oil and the two aqueous control samples were each tank-mixed with water alone (Spray solutions A in Table 16), with an aqueous solution of glyphosate salt (Spray solutions B-F in Table 16), and with an water-dispersible granule of glyphosate ammonium salt (spray solution G in Table 16). Spray solutions A containing 1.87 % v/v of 2,4-D concentrate were prepared by diluting 5.61 mL of each of the four 2,4-D concentrates with 294.39 mL of deionized water. Spray solutions B containing 1.87 % v/v of 2,4-D concentrate and 2.78 % v/v of glyphosate potassium concentrate were prepared by diluting 5.61 mL of each of the four 2,4-D concentrates with 8.34 mL of RoundUp PowerMax® herbicide (containing 540 gae/L of glyphosate potassium; Monsanto; St. Louis, MO) and 286.05 mL of deionized water. Spray solutions C containing 1.87 % v/v of 2,4-D concentrate and 3.125 % v/v of glyphosate DMA concentrate were prepared by diluting 5.61 mL of each of the four 2,4-D concentrates with 9.375 mL of Durango® herbicide (containing 480 gae/L glyphosate DMA, Dow AgroSciences, Indianapolis, IN) and 285.015 mL of deionized water. Spray solutions D containing 1.87 % v/v of 2,4-D concentrate and 3.00 % v/v of glyphosate K concentrate were prepared by diluting 5.61 mL of each of the four 2,4-D concentrates with 9.00 mL of Zapp Qi® herbicide (containing 500 gae/L glyphosate K, Syngenta) and 285.39 mL of deionized water. Spray solutions E containing 1.87 % v/v of 2,4-D concentrate and 3.125 % v/v of glyphosate IPA concentrate were prepared by diluting 5.61 mL of each of the four 2,4-D concentrates with 9.375 mL of Transorb® herbicide (containing 480 gae/L glyphosate IPA, Monsanto; St. Louis, MO) and 285.015 mL of deionized water. Spray solutions F containing 1.87 % v/v of 2,4-D concentrate and 3.125 % v/v of glyphosate K concentrate were prepared by diluting 5.61 mL of each of the four 2,4-D concentrates with 9.375 mL of Transorb® R herbicide (containing 480 gae/L glyphosate K, Monsanto; St. Louis, MO) and 285.015 mL of deionized water. Spray solutions G containing 1.87 % v/v of 2,4-D concentrate and 2.08 g of glyphosate ammounium water-dispersible granules were prepared by diluting 5.61 mL of each of the four 2,4-D concentrates with 6.249 g of Roundup® WDG herbicide (containing 720 gae/kg glyphosate ammonium, Monsanto; St. Louis, MO) and 288.144 mL of deionized water. All tank mixed spray solutions were lightly shaken by hand until each sample was homogenous. The herbicide spray solutions containing the various tank-mixed herbicides and the control samples without omega-9 canola oil were sprayed using the method described in Example 1. The percentage of driftable fines was expressed as the volume percentage of spray droplets below 150 µm volume mean diameter (VMD) as shown in Table 16.

**Table 16: Spray Droplet Analysis of 2,4-D Herbicide Sprays Containing Various Tank-mixed Herbicides**

| **2,4-D Salt Concentrates** (wt% omega-9 canola oil) | **Spray Solutions A - G** | | | | | | |
|---|---|---|---|---|---|---|---|
| | A (2,4-D salt only) | B (2,4-D + Roundup® Powermax ) | C (2,4-D + Durango®) | D (2,4-D + Zapp Qi®) | E (2,4-D + Transorb®) | F (2,4-D + Transorb R®) | G (2,4-D + Roundup® WDG) |
| | Volume Percentage of Driftable Fines (<150 µm VMD) | | | | | | |
| 2,4-D Choline control (0 wt%) | 45 | 50 | 48 | 49 | 50 | 50 | 52 |
| 2,4-D Choline (2 wt%) | 15 | 21 | 19 | 17 | 24 | 25 | 29 |
| 2,4-D DMA control (0 wt%) | 44 | 52 | 50 | 49 | 50 | 52 | 53 |
| 2,4-D DMA (2 wt%) | 18 | 31 | 27 | 23 | 31 | 33 | 47 |

### Example 12

### 2,4-D choline herbicide concentrate with canola oil

An aqueous herbicide concentrate containing 383 gae/kg of 2,4-D choline, 20 g/kg of Atlox DP 13/6 surfactant (Croda; Edison, NJ), 56 g/kg of propylene glycol (co-solvent), 10 g/kg of ethylenediaminetetraacetic acid choline salt, 2.5 g/kg of polymeric surfactant Atlox™ 4912 (Croda; Edison, NJ), 15 g/kg of polymeric surfactant (Croda; Edison, NJ) and 20 g/kg of pure canola oil (Dow AgroSciences, Indianapolis, IN) was prepared as described. A 4-oz vial (Vial A) was first charged with 2 g of pure canola oil. To the vial were added, 2.00 g of Atlox DP 13/6, 0.25 g of Atlox™ 4912, 0.15 g of Atlas G-5000 and 5.60 g of propylene glycol, and the mixture formed was then stirred with an overhead mixer until a homogenous solution formed. To a second 4-oz vial (Vial B) were added 86.00 g of a 44.5 wt% ae basis 2,4-D choline salt solution in water, 4.00 g of an EDTA-choline aqueous solution (25 wt%), and the ingredient in the Vial A to provide a sample with a total weight of 100 g. The mixture (Vial B) was then mixed with an overhead agitator to provide a homogenous herbicide concentrate containing built-in pure canola oil. One aqueous 2,4-D choline concentrate containing pure canola oil and one aqueous control concentrate where the pure canola oil was substituted with water were prepared in this manner.

**Table 17. Composition of 2,4-D Choline Herbicide Concentrate Containing Pure Canola Oil**

| **Component** | **Wt%** |
|---|---|
| 2,4-D Choline Solution | 86.00 |
| Propylene glycol | 5.60 |
| Atlox DP 13/6 | 2.00 |
| EDTA-choline (25 wt%) | 4.00 |
| Pure canola oil | 2.00 |
| Atlox 4912 | 0.25 |
| Atlas G-5000 | 0.15 |
| Total | 100.00 |

### 2,4-D herbicide spray solutions containing pure canola oil and various herbicides, and spray droplet analysis:

The aqueous 2,4-D salt concentrate containing pure canola oil was tank-mixed with water alone (Spray Solutions A in Table 18), with aqueous solutions of glyphosate salts (Spray Solutions B-F in Table 18), and with a water-dispersible granule of glyphosate ammonium salt (Spray Solutions G in Table 18). In addition, two different weight ratios of 2,4-D to glyphosate and two different spray volumes in liters per hectare (L/ha) were used to prepare and apply the spray solutions (listed in Table 18). All tank mixed spray solutions were lightly shaken by hand until each sample was homogenous. The herbicide spray solutions containing various tank-mixed herbicides and the control samples without pure canola oil were sprayed using the method described in Example 1. The percentage of driftable fines was expressed as the volume percentage of spray droplets below 150 µm volume mean diameter (VMD) as shown in Table 18.

**Table 18: Spray Droplet Analysis of 2,4-D Herbicide Sprays Containing Pure Canola Oil and Additional Herbicides**

| **Herbicide Application Rates** | | **Spray volume (L/ha)** | **Spray Solutions A - G¹** | | | | | | |
|---|---|---|---|---|---|---|---|---|---|
| **2,4-D Choline (gae/ha)** | **Glyphosate salt (gae/ha)** | | A (2,4-D alone) | B (2,4-D + Roundup® Powermax) | C (2,4-D + Durango®) | D (2,4-D + Zapp Qi®) | E (2,4-D + Transorb®) | F (2,4-D + Transorb R®) | G (2,4-D + Roundup® WDG) |
| | | | Volume Percentage of Driftable Fines (<150 µm VMD) | | | | | | |
| 684 | 1200 | 80 | 15 | 26 | 20 | 20 | 26 | 26 | 30 |
| 684 | 1200 | 160 | 15 | 21 | 18 | 17 | 21 | 22 | 20 |
| 684 | 720 | 80 | 15 | 21 | 20 | 17 | 22 | 24 | 24 |
| 684 | 720 | 160 | 15 | 17 | 17 | 16 | 17 | 20 | 18 |

| | | | | | | | | | |
|---|---|---|---|---|---|---|---|---|---|
| ¹ Spray solutions A - G contain pure canola oil; when the 2,4-D choline control concentrate containing no pure canola oil was used in spray solutions A - G, the volume percentages of driftable fines (<150 µm VMD) for all the sprays ranged from 43 - 55 %. | | | | | | | | | |

### Example 13

### 2,4-D choline herbicide concentrate containing canola oil and different co-solvents:

An aqueous herbicide concentrate containing 383 gae/kg of 2,4-D choline, 20 g/kg of Atlox DP 13/6 surfactant (Croda; Edison, NJ), 47.5 g/kg of a co-solvent (chosen from propylene glycol and the ethylene/propylene glycol ethers: Dowanol™EB, Dowanol™DPM or Dowanol™DPnP; all available from Dow Chemical; Midland, MI), 10 g/kg of ethylenediaminetetraacetic acid choline salt, 2.5 g/kg of polymeric surfactant Atlox™ 4912 (Croda; Edison, NJ), 4.5 g/kg of choline hydroxide and 20 g/kg of pure canola oil (Dow AgroSciences, Indianapolis, IN) was prepared as described. A 4-oz vial (Vial A) was first charged with 2 g of pure canola oil. To the vial were added, 2.00 g of Atlox DP 13/6, 0.25 g of Atlox™ 4912, 0.15 g of Atlas G-5000 and 5.60 g of the co-solvent, and the mixture formed was then stirred with an overhead mixer until a homogenous solution formed. To a second 4-oz vial (Vial B) were added 86.00 g of a 44.5 wt% ae basis 2,4-D choline salt solution in water, 4.00 g of an EDTA-choline aqueous solution (25 wt%), and the ingredients in Vial A to provide a sample with a total weight of 100 g. The mixture (Vial B) was then mixed with an overhead agitator to provide a homogenous herbicide concentrate containing built-in pure canola oil.

**Table 18. Composition of 2,4-D Choline Herbicide Concentrate Containing Pure Canola Oil**

| **Component** | **Wt%** |
|---|---|
| 2,4-D Choline Solution | 86.00 |
| Co-solvent | 4.75 |
| Atlox DP 13/6 | 2.00 |
| EDTA-choline (25 wt%) | 4.00 |
| Pure canola oil | 2.00 |
| Atlox 4912 | 0.25 |
| Choline hydroxide (45wt%) | 1.00 |
| Total | 100.00 |

Five aqueous 2,4-D choline concentrates containing pure canola oil and various co-solvents, and one aqueous control concentrate containing propylene glycol as the co-solvent and where the pure canola oil was substituted with water were prepared in this manner.

### 2,4-D herbicide spray solutions containing pure canola oil, various co-solvents and herbicides, and spray droplet analysis:

The aqueous 2,4-D salt concentrates containing pure canola oil and various co-solvents were tank-mixed with water alone (Spray Solutions A in Table 19), with aqueous solutions of glyphosate salts (Spray Solutions B-F in Table 19), and with a water-dispersible granule of glyphosate ammonium salt (Spray Solutions G in Table 19). All tank mixed spray solutions were lightly shaken by hand until each sample was homogenous. The herbicide spray solutions containing the various tank-mixed herbicides and the control samples without pure canola oil were sprayed using the method described in Example 1. The percentage of driftable fines was expressed as the volume percentage of spray droplets below 150 µm volume mean diameter (VMD) as shown in Table 19.

**Table 19: Spray Droplet Analysis of 2,4-D Herbicide Sprays Containing Pure Canola Oil, Various Co-solvents and Additional Herbicides**

| **Co-solvent Used in 2,4-D Choline Concentrate (4.75 wt%)** | **Spray Solutions A - G¹** | | | | | | |
|---|---|---|---|---|---|---|---|
| | A (2,4-D alone) | B (2,4-D + Roundup® Powermax) | C (2,4-D + Durango®) | D (2,4-D + Zapp Qi®) | E (2,4-D + Transorb®) | F (2,4-D + Transorb R®) | G (2,4-D + Roundup® WDG) |
| | Volume Percentage of Driftable Fines (<150 µm VMD) | | | | | | |
| Propylene glycol | 14 | 25 | 20 | 19 | 25 | 24 | 29 |
| Dowanol™ EB | 21 | 28 | 24 | 22 | 27 | 28 | 33 |
| Dowanol™ DPM | 17 | 26 | 21 | 19 | 26 | 26 | 30 |
| Dowanol™ DPnP | 26 | 32 | 28 | 26 | 31 | 31 | 35 |

| | | | | | | | |
|---|---|---|---|---|---|---|---|
| ¹Spray solutions A - G contain pure canola oil (herbicide application rates: 684 gae/ha 2,4-D choline, 1200 gae/ha glyphosate salt; spray volume: 80 L/ha); when the 2,4-D choline control concentrate containing no pure canola oil was used in spray solutions A - G, the volume percentages of driftable fines (<150 µm VMD) for all the sprays ranged from 43 - 55 %. | | | | | | | |

## Claims

1. An aqueous herbicide concentrate, comprising:
from 5 to 90 weight percent of a water soluble salt of a herbicide, wherein the herbicide is an auxinic herbicide;
from 0.1 to 20 weight percent of a surfactant, wherein the surfactant is an acid or salt of a mono or dialkyl phosphate ester, an acid or salt of an ethoxylated mono or dialkyl phosphate ester, an acid or salt of a mono or dialkyl phosphate ester of an ethoxylated tristyrylphenol, or an acid or salt of a mono or dialkyl phosphate ester of an ethoxylated phenol or an ethoxylated alkylphenol, an ABA block copolymer having a hydrophilic portion of polyethylene oxide and a hydrophobic portion of poly(12-hydroxystearate), a polyvinyl alcohol resin wherein the degree of hydrolysis is 86-89%, a block or graft acrylate or methacrylate copolymer, an alkyd polyethylene oxide resin, or an AB block copolymer containing EO and PO blocks; and
from 0.1 to 20 weight percent of a fatty acid alkyl ester, wherein the fatty acid alkyl ester is methyl caproate, methyl caprylate, methyl caprate, methyl laurate, methyl myristate, methyl palmitate, methyl stearate, methyl oleate, methyl linoleate, methyl linolenate, or mixtures thereof;
a fatty acid amide, wherein the fatty acid amide is N,N-dimethylcaprylamide, N,N-dimethylcapramide, or mixtures thereof;
and/or a triglyceride fatty acid ester, wherein the triglyceride fatty acid ester is soybean oil, rapeseed oil, olive oil, castor oil, sunflower seed oil, almond oil, canola oil, omega-9 canola oil, coconut oil, corn oil, cotton seed oil, linseed oil, palm oil, peanut oil, safflower oil, sesame oil, tung oil, or mixtures thereof;
wherein the aqueous herbicide concentrate is a transparent, homogeneous liquid that forms a stable emulsion upon dilution into a spray solution.

2. The aqueous concentrate composition of claim 1, wherein the water-soluble salt of the auxinic herbicide is a water soluble salt of 2,4-D, a water soluble salt of triclopyr, a water soluble salt of dicamba, or mixtures thereof.

3. The aqueous concentrate composition of any of claims 1-2, wherein the water-soluble salt of the auxinic herbicide is a water soluble salt of 2,4-D, preferably 2,4-D choline salt or 2,4-D dimethyl ammonium salt.

4. The aqueous concentrate composition of any of claims 1-3, wherein the water-soluble salt of the auxinic herbicide is 2,4-D choline salt or 2,4-D dimethyl ammonium salt, and the composition comprises the fatty acid alkyl ester.

5. The aqueous concentrate composition of any of claims 1-4, wherein the water-soluble salt of the auxinic herbicide is 2,4-D choline salt or 2,4-D dimethyl ammonium salt, and the composition comprises the triglyceride fatty acid ester.

6. A method for reducing spray drift during herbicide spray application to control plant growth comprising:
providing an aqueous herbicide concentrate comprising:
from 5 to 90 weight percent of a water soluble salt of a herbicide, wherein the herbicide is an auxinic herbicide;
from 0.1 to 20 weight percent of a surfactant, wherein the surfactant is an acid or salt of a mono or dialkyl phosphate ester, an acid or salt of an ethoxylated mono or dialkyl phosphate ester, an acid or salt of a mono or dialkyl phosphate ester of an ethoxylated tristyrylphenol, or an acid or salt of a mono or dialkyl phosphate ester of an ethoxylated phenol an ethoxylated alkylphenol, an ABA block copolymer having a hydrophilic portion of polyethylene oxide and a hydrophobic portion of poly(12-hydroxystearate), a polyvinyl alcohol resin wherein the degree of hydrolysis is 86-89%, a block or graft acrylate or methacrylate copolymer, an alkyd polyethylene oxide resin, or an AB block copolymer containing EO and PO blocks;
from 0.1 to 20 weight percent of a fatty acid alkyl ester, wherein the fatty acid alkyl ester is methyl caproate, methyl caprylate, methyl caprate, methyl laurate, methyl myristate, methyl palmitate, methyl stearate, methyl oleate, methyl linoleate, methyl linolenate, or mixtures thereof;
a fatty acid amide, wherein the fatty acid amide is N,N-dimethylcaprylamide, N,N-dimethylcapramide, or mixtures thereof;
and/or a triglyceride fatty acid ester, wherein the triglyceride fatty acid ester is soybean oil, rapeseed oil, olive oil, castor oil, sunflower seed oil, almond oil, canola oil, omega-9 canola oil, coconut oil, corn oil, cotton seed oil, linseed oil, palm oil, peanut oil, safflower oil, sesame oil, tung oil, or mixtures thereof;
wherein the aqueous herbicide concentrate is a transparent, homogeneous liquid that forms a stable emulsion upon addition to water;
adding the aqueous herbicide concentrate to a spray tank containing water to form the stable emulsion; and
spraying the stable emulsion to control plant growth, wherein the median diameter of the spray droplets created is increased above that of a spray composition that does not include the fatty acid alkyl ester, fatty acid amide, or triglyceride fatty acid ester.

7. The method of claim 6, wherein the water-soluble salt of the auxinic herbicide is a water soluble salt of 2,4-D, a water soluble salt of triclopyr, a water soluble salt of dicamba, or mixtures thereof.

8. The method of any of claims 6-7, wherein the water-soluble salt of the auxinic herbicide is a water soluble salt of 2,4-D, preferably 2,4-D choline salt or 2,4-D dimethyl ammonium salt.

9. The method of any of claims 6-8, wherein the aqueous herbicide concentrate is added to a spray tank of water further comprising an additional herbicide.

10. The method of claim 9, wherein the additional herbicide is glyphosate or glufosinate.

11. The method of Claim 10, wherein the water-soluble salt of the auxinic herbicide is 2,4-D choline salt or 2,4-D dimethyl ammonium salt and the glyphosate is glyphosate dimethyl ammonium salt, glyphosate isopropyl ammonium salt, or glyphosate potassium salt.

12. The method of Claim 10, wherein the water-soluble salt of the auxinic herbicide is 2,4-D choline salt or 2,4-D dimethyl ammonium salt, the glyphosate is glyphosate dimethyl ammonium salt, glyphosate isopropyl ammonium salt or glyphosate potassium salt, the glufosinate salt is glufosinate ammonium salt, and the aqueous concentrate comprises the fatty acid alkyl ester.

13. The method of Claim 10, wherein the water-soluble salt of the auxinic herbicide is 2,4-D choline salt, the glyphosate is glyphosate dimethyl ammonium salt, and the aqueous concentrate comprises the fatty acid alkyl ester.

14. The method of Claim 10, wherein the water-soluble salt of the auxinic herbicide is 2,4-D choline salt or 2,4-D dimethyl ammonium salt, the glyphosate is glyphosate dimethyl ammonium salt, glyphosate isopropyl ammonium salt or glyphosate potassium salt, and the aqueous concentrate comprises the triglyceride fatty acid ester.

15. The method of Claim 10, wherein the water-soluble salt of the auxinic herbicide is 2,4-D choline salt, the glyphosate is glyphosate dimethyl ammonium salt or glyphosate potassium salt, and the aqueous concentrate comprises the triglyceride fatty acid ester.

## Patentansprüche

1. Ein wässriges Herbizidkonzentrat umfassend:
von 5 bis 90 Gew.-% eines wasserlöslichen Salzes eines Herbizids, wobei das Herbizid ein Herbizid vom Auxin-Typ ist;
von 0,1 bis 20 Gew.-% eines oberflächenaktiven Mittels, wobei das oberflächenaktive Mittel eine Säure oder ein Salz eines Mono- oder Dialkylphosphatesters, eine Säure oder ein Salz eines ethoxylierten Mono- oder Dialkylphosphatesters, eine Säure oder ein Salz eines Mono- oder Dialkylphosphatesters eines ethoxylierten Tristyrolphenols oder eine Säure oder ein Salz eines Mono- oder Dialkylphosphatesters eines ethoxylierten Phenols oder eines ethoxylierten Alkylphenols, ein ABA-Block-Copolymer mit einem hydrophilen Teil aus Polyethylenoxid und einem hydrophoben Teil aus Poly(12-hydroxystearat), ein Polyvinylalkoholharz, in welchem der Hydrolysegrad 86 bis 89% beträgt, ein Block- oder Pfropf-Acrylat- oder -Methacrylat-Copolymer, ein Alkydpolyethylenoxidharz oder ein AB-Block-Copolymer enthaltend EO- und PO-Blöcke ist; und
von 0,1 bis 20 Gew.-% eines Fettsäurealkylesters, wobei der Fettsäurealkylester Capronsäuremethylester, Caprylsäuremethylester, Caprinsäuremethylester, Laurinsäuremethylester, Myristinsäuremethylester, Palmitinsäuremethylester, Stearinsäuremethylester, Ölsäuremethylester, Linolsäuremethylester, Linolinsäuremethylester oder Mischungen derselben ist; ein Fettsäureamid, wobei das Fettsäureamid N,N-Dimethylcaprylamid, N,N-Dimethylcapramid oder Mischungen derselben ist;
und/oder ein Triglyceridfettsäureester, wobei der Triglyceridfettsäureester Sojaöl, Rapsöl, Olivenöl, Rizinusöl, Sonnenblumensamenöl, Mandelöl, Canolaöl, Omega-9-Canolaöl, Kokosöl, Maisöl, Baumwollsamenöl, Leinsamenöl, Palmöl, Erdnussöl, Distelöl, Sesamöl, Tungöl oder Mischungen derselben ist;
wobei das wässrige Herbizidkonzentrat eine transparente homogene Flüssigkeit ist, die bei Verdünnung zu einer Sprühlösung eine stabile Emulsion bildet.

2. Die wässrige Konzentratzusammensetzung gemäß Anspruch 1, wobei das wasserlösliche Salz des Herbizids vom Auxin-Typ ein wasserlösliches Salz von 2,4-D, ein wasserlösliches Salz von Triclopyr, ein wasserlösliches Salz von Dicamba oder Mischungen derselben ist.

3. Die wässrige Konzentratzusammensetzung gemäß einem der Ansprüche 1 bis 2, wobei das wasserlösliche Salz des Herbizids vom Auxin-Typ ein wasserlösliches Salz von 2,4-D, vorzugsweise 2,4-D-Cholinsalz oder 2,4-D-Dimethylammoniumsalz, ist.

4. Die wässrige Konzentratzusammensetzung gemäß einem der Ansprüche 1 bis 3, wobei das wasserlösliche Salz des Herbizids vom Auxin-Typ 2,4-D-Cholinsalz oder 2,4-D-Dimethylammoniumsalz ist und die Zusammensetzung den Fettsäurealkylester umfasst.

5. Die wässrige Konzentratzusammensetzung gemäß einem der Ansprüche 1 bis 4, wobei das wasserlösliche Salz des Herbizids vom Auxin-Typ 2,4-D-Cholinsalz oder 2,4-D-Dimethylammoniumsalz ist und die Zusammensetzung den Triglyceridfettsäureester umfasst.

6. Ein Verfahren zur Verminderung von Sprühnebelabdrift während einer Herbizid-Sprühanwendung zur Bekämpfung von Pflanzenwachstum umfassend:
Bereitstellen eines wässrigen Herbizidkonzentrats umfassend:
von 5 bis 90 Gew.-% eines wasserlöslichen Salzes eines Herbizids, wobei das Herbizid ein Herbizid vom Auxin-Typ ist;
von 0,1 bis 20 Gew.-% eines oberflächenaktiven Mittels, wobei das oberflächenaktive Mittel eine Säure oder ein Salz eines Mono- oder Dialkylphosphatesters, eine Säure oder ein Salz eines ethoxylierten Mono- oder Dialkylphosphatesters, eine Säure oder ein Salz eines Mono- oder Dialkylphosphatesters eines ethoxylierten Tristyrolphenols oder eine Säure oder ein Salz eines Mono- oder Dialkylphosphatesters eines ethoxylierten Phenols oder eines ethoxylierten Alkylphenols, ein ABA-Block-Copolymer mit einem hydrophilen Teil aus Polyethylenoxid und einem hydrophoben Teil aus Poly(12-hydroxystearat), ein Polyvinylalkoholharz, in welchem der Hydrolysegrad 86 bis 89% beträgt, ein Block- oder Pfropf-Acrylat- oder -Methacrylat-Copolymer, ein Alkydpolyethylenoxidharz oder ein AB-Block-Copolymer, enthaltend EO- und PO-Blöcke ist; und
von 0,1 bis 20 Gew.-% eines Fettsäurealkylesters, wobei der Fettsäureester Capronsäuremethylester, Caprylsäuremethylester, Caprinsäuremethylester, Laurinsäuremethylester, Myristinsäuremethylester, Palmitinsäuremethylester, Stearinsäuremethylester, Ölsäuremethylester, Linolsäuremethylester, Linolinsäuremethylester oder Mischungen derselben ist; ein Fettsäureamid, wobei das Fettsäureamid N,N-Dimethylcaprylamid, N,N-Dimethylcapramid oder Mischungen derselben ist;
und/oder ein Triglyceridfettsäureester, wobei der Triglyceridfettsäureester Sojaöl, Rapsöl, Olivenöl, Rizinusöl, Sonnenblumensamenöl, Mandelöl, Canolaöl, Omega-9-Canolaöl, Kokosöl, Maisöl, Baumwollsamenöl, Leinsamenöl, Palmöl, Erdnussöl, Distelöl, Sesamöl, Tungöl oder Mischungen derselben ist;
wobei das wässrige Herbizidkonzentrat eine transparente homogene Flüssigkeit ist, die bei Hinzugabe zu Wasser eine stabile Emulsion bildet; Hinzugeben des wässrigen Herbizidkonzentrats in einen Sprühtank, der Wasser enthält, um die stabile Emulsion zu bilden; und
Versprühen der stabilen Emulsion, um Pflanzenwachstum zu bekämpfen, wobei der mittlere Durchmesser der gebildeten Sprühtröpfchen gegenüber einer Sprühzusammensetzung, die den Fettsäurealkylester, das Fettsäureamid oder den Triglyceridfettsäureester nicht enthält, vergrößert ist.

7. Das Verfahren gemäß Anspruch 6, wobei das wasserlösliche Salz des Herbizids vom Auxin-Typ ein wasserlösliches Salz von 2,4-D, ein wasserlösliches Salz von Triclopyr, ein wasserlösliches Salz von Dicamba oder Mischungen derselben ist.

8. Das Verfahren gemäß einem der Ansprüche 6 bis 7, wobei das wasserlösliche Salz des Herbizids vom Auxin-Typ ein wasserlösliches Salz von 2,4-D, vorzugsweise 2,4-D-Cholinsalz oder 2,4-D-Dimethylammoniumsalz ist.

9. Das Verfahren gemäß einem der Ansprüche 6 bis 8, wobei das wässrige Herbizidkonzentrat zu einem Sprühtank mit Wasser, welcher zusätzlich ein weiteres Herbizid umfasst, hinzugefügt wird.

10. Das Verfahren gemäß Anspruch 9, wobei das zusätzliche Herbizid Glyphosat oder Glufosinat ist.

11. Das Verfahren gemäß Anspruch 10, wobei das wasserlösliche Salz des Herbizids vom Auxin-Typ 2,4-D-Cholinsalz oder 2,4-D-Dimethylammoniumsalz ist und das Glyphosat Glyphosatdimethylammoniumsalz, Glyphosatisopropylammoniumsalz oder Glyphosatkaliumsalz ist.

12. Das Verfahren gemäß Anspruch 10, wobei das wasserlösliche Salz des Herbizids vom Auxin-Typ 2,4-D-Cholinsalz oder 2,4-D-Dimethylammoniumsalz ist, das Glyphosat Glyphosatdimethylammoniumsalz, Glyphosatisopropylammoniumsalz oder Glyphosatkaliumsalz ist, das Glufosinatsalz Glufosinatammoniumsalz ist und das wässrige Konzentrat den Fettsäurealkylester umfasst.

13. Das Verfahren gemäß Anspruch 10, wobei das wasserlösliche Salz des Herbizids vom Auxin-Typ 2,4-D-Cholinsalz ist, das Glyphosat Glyphosatdimethylammoniumsalz ist und das wässrige Konzentrat den Fettsäurealkylester umfasst.

14. Das Verfahren gemäß Anspruch 10, wobei das wasserlösliche Salz des Herbizids vom Auxin-Typ 2,4-D-Cholinsalz oder 2,4-D-Dimethylammoniumsalz ist, das Glyphosat Glyphosatdimethylammoniumsalz, Glyphosatisopropylammoniumsalz oder Glyphosatkaliumsalz ist und das wässrige Konzentrat den Triglyceridfettsäureester umfasst.

15. Das Verfahren gemäß Anspruch 10, wobei das wasserlösliche Salz des Herbizids vom Auxin-Typ 2,4-D-Cholinsalz ist, das Glyphosat Glyphosatdimethylammoniumsalz oder Glyphosatkaliumsalz ist und das wässrige Konzentrat den Triglyceridfettsäureester umfasst.

## Revendications

1. Concentré aqueux d'herbicide, comprenant :
- de 5 à 90 % en poids d'un sel hydrosoluble d'un herbicide, lequel herbicide est un herbicide auxinique,
- de 0,1 à 20 % en poids d'un tensioactif, lequel tensioactif est un ester phosphate de monoalkyle ou dialkyle sous forme acide ou sel, un ester phosphate de monoalkyle ou dialkyle éthoxylé sous forme acide ou sel, un ester phosphate de monoalkyle ou dialkyle de tri-styryl-phénol éthoxylé sous forme acide ou sel, ou un ester phosphate de monoalkyle ou dialkyle de phénol éthoxylé ou d'un alkyl-phénol éthoxylé sous forme acide ou sel, ou bien un copolymère à blocs, de structure ABA, avec une partie hydrophile poly(oxy-éthylène) et une partie hydrophobe poly(12-hydroxy-stéarate), une résine poly(alcool vinylique) dont le degré d'hydrolyse vaut de 86 à 89 %, un copolymère d'acrylate ou de méthacrylate, à blocs ou de greffage, une résine alkyde-poly(oxy-éthylène), ou un copolymère à blocs, de structure AB, comportant des blocs EO et PO,
- et de 0,1 à 20 % en poids
d'un ester d'alkyle d'acide gras, lequel ester d'alkyle d'acide gras est du caproate de méthyle, du caprylate de méthyle, du caprate de méthyle, du laurate de méthyle, du myristate de méthyle, du palmitate de méthyle, du stéarate de méthyle, de l'oléate de méthyle, du linoléate de méthyle, ou du linolénate de méthyle, ou un mélange de ces esters,
d'un amide d'acide gras, lequel amide d'acide gras est du N,N-diméthyl-caprylamide ou du N,N-diméthyl-capramide, ou un mélange de ces amides,
et/ou d'un ester triglycéride d'acide gras, lequel ester triglycéride d'acide gras est de l'huile de soja, de l'huile de colza, de l'huile d'olive, de l'huile de ricin, de l'huile de tournesol, de l'huile d'amande, de l'huile de canola, de l'huile de canola « Oméga-9 », de l'huile de noix de coco, de l'huile de maïs, de l'huile de coton, de l'huile de lin, de l'huile de palme, de l'huile d'arachide,
de l'huile de carthame, de l'huile de sésame, de l'huile de tung, ou un mélange de telles huiles,
lequel concentré aqueux d'herbicide est un liquide homogène et transparent qui forme une émulsion stable après une dilution donnant une solution à pulvériser.

2. Composition de concentré aqueux conforme à la revendication 1, dans laquelle le sel hydrosoluble d'un herbicide auxinique est un sel hydrosoluble de 2,4-D, un sel hydrosoluble de triclopyr, un sel hydrosoluble de dicamba, ou un mélange de tels sels.

3. Composition de concentré aqueux conforme à l'une des revendications 1 et 2, dans laquelle le sel hydrosoluble d'un herbicide auxinique est un sel hydrosoluble de 2,4-D, de préférence du sel de choline de 2,4-D ou du sel de diméthyl-ammonium de 2,4-D.

4. Composition de concentré aqueux conforme à l'une des revendications 1 à 3, dans laquelle le sel hydrosoluble d'un herbicide auxinique est du sel de choline de 2,4-D ou du sel de diméthyl-ammonium de 2,4-D, et laquelle composition comprend un ester d'alkyle d'acide gras.

5. Composition de concentré aqueux conforme à l'une des revendications 1 à 4, dans laquelle le sel hydrosoluble d'un herbicide auxinique est du sel de choline de 2,4-D ou du sel de diméthyl-ammonium de 2,4-D, et laquelle composition comprend un ester triglycéride d'acide gras.

6. Procédé visant à réduire la dérive de pulvérisation au cours d'une application d'herbicide par pulvérisation effectuée pour lutter contre la croissance de végétaux, lequel procédé comporte les étapes suivantes :
- prendre un concentré aqueux d'herbicide, comprenant :
de 5 à 90 % en poids d'un sel hydrosoluble d'un herbicide, lequel herbicide est un herbicide auxinique,
de 0,1 à 20 % en poids d'un tensioactif, lequel tensioactif est un ester phosphate de monoalkyle ou dialkyle sous forme acide ou sel, un ester phosphate de monoalkyle ou dialkyle éthoxylé sous forme acide ou sel, un ester phosphate de monoalkyle ou dialkyle de tri-styryl-phénol éthoxylé sous forme acide ou sel, ou un ester phosphate de monoalkyle ou dialkyle de phénol éthoxylé ou d'un alkyl-phénol éthoxylé sous forme acide ou sel, ou bien un copolymère à blocs, de structure ABA, avec une partie hydrophile poly(oxy-éthylène) et une partie hydrophobe poly(12-hydroxy-stéarate), une résine poly(alcool vinylique) dont le degré d'hydrolyse vaut de 86 à 89 %, un copolymère d'acrylate ou de méthacrylate, à blocs ou de greffage, une résine alkyde-poly(oxy-éthylène), ou un copolymère à blocs, de structure AB, comportant des blocs EO et PO,
et de 0,1 à 20 % en poids
d'un ester d'alkyle d'acide gras, lequel ester d'alkyle d'acide gras est du caproate de méthyle, du caprylate de méthyle, du caprate de méthyle, du laurate de méthyle, du myristate de méthyle, du palmitate de méthyle, du stéarate de méthyle, de l'oléate de méthyle, du linoléate de méthyle, ou du linolénate de méthyle, ou un mélange de ces esters,
d'un amide d'acide gras, lequel amide d'acide gras est du N,N-diméthyl-caprylamide, du N,N-diméthyl-capramide, ou un mélange de ces amides,
et/ou d'un ester triglycéride d'acide gras, lequel ester triglycéride d'acide gras est de l'huile de soja, de l'huile de colza, de l'huile d'olive, de l'huile de ricin, de l'huile de tournesol, de l'huile d'amande, de l'huile de canola, de l'huile de canola « Oméga-9 », de l'huile de noix de coco, de l'huile de maïs, de l'huile de coton, de l'huile de lin, de l'huile de palme, de l'huile d'arachide, de l'huile de carthame, de l'huile de sésame, de l'huile de tung, ou un mélange de telles huiles,
lequel concentré aqueux d'herbicide est un liquide homogène et transparent qui forme une émulsion stable après addition à de l'eau ;
- ajouter ce concentré aqueux d'herbicide à de l'eau contenue dans une cuve-réservoir à pulvérisation, pour que s'y forme une émulsion stable,
- et pulvériser cette émulsion stable pour lutter contre la croissance de végétaux,
étant entendu que le diamètre médian des gouttelettes de liquide pulvérisé créées est augmenté par rapport à ce qu'il est dans le cas d'une composition à pulvériser qui ne contient pas d'ester d'alkyle d'acide gras, d'amide d'acide gras ou d'ester triglycéride d'acide gras.

7. Procédé conforme à la revendication 6, dans lequel le sel hydrosoluble d'un herbicide auxinique est un sel hydrosoluble de 2,4-D, un sel hydrosoluble de triclopyr, un sel hydrosoluble de dicamba, ou un mélange de tels sels.

8. Procédé conforme à l'une des revendications 6 et 7, dans lequel le sel hydrosoluble d'un herbicide auxinique est un sel hydrosoluble de 2,4-D, de préférence du sel de choline de 2,4-D ou du sel de diméthyl-ammonium de 2,4-D.

9. Procédé conforme à l'une des revendications 6 à 8, dans lequel on ajoute le concentré aqueux d'herbicide à de l'eau contenue dans une cuve-réservoir à pulvérisation, qui contient en outre un herbicide supplémentaire.

10. Procédé conforme à la revendication 9, dans lequel l'herbicide supplémentaire est du glyphosate ou du glufosinate.

11. Procédé conforme à la revendication 10, dans lequel le sel hydrosoluble d'un herbicide auxinique est du sel de choline de 2,4-D ou du sel de diméthyl-ammonium de 2,4-D, et le glyphosate est du sel de diméthyl-ammonium de glyphosate, du sel d'isopropyl-ammonium de glyphosate ou du sel de potassium de glyphosate.

12. Procédé conforme à la revendication 10, dans lequel le sel hydrosoluble d'un herbicide auxinique est du sel de choline de 2,4-D ou du sel de diméthyl-ammonium de 2,4-D, le glyphosate est du sel de diméthyl-ammonium de glyphosate, du sel d'isopropyl-ammonium de glyphosate ou du sel de potassium de glyphosate, le sel de glufosinate est du sel d'ammonium de glufosinate, et le concentré aqueux comprend un ester d'alkyle d'acide gras.

13. Procédé conforme à la revendication 10, dans lequel le sel hydrosoluble d'un herbicide auxinique est du sel de choline de 2,4-D, le glyphosate est du sel de diméthyl-ammonium de glyphosate, et le concentré aqueux comprend un ester d'alkyle d'acide gras.

14. Procédé conforme à la revendication 10, dans lequel le sel hydrosoluble d'un herbicide auxinique est du sel de choline de 2,4-D ou du sel de diméthyl-ammonium de 2,4-D, le glyphosate est du sel de diméthyl-ammonium de glyphosate, du sel d'isopropyl-ammonium de glyphosate ou du sel de potassium de glyphosate, et le concentré aqueux comprend un ester triglycéride d'acide gras.

15. Procédé conforme à la revendication 10, dans lequel le sel hydrosoluble d'un herbicide auxinique est du sel de choline de 2,4-D, le glyphosate est du sel de diméthyl-ammonium de glyphosate ou du sel de potassium de glyphosate, et le concentré aqueux comprend un ester triglycéride d'acide gras.
